(19) Europäisches Patentamt / European Patent Office / Office européen des brevets

(11) **EP 4 013 832 B1**

(12) **EUROPEAN PATENT SPECIFICATION**

(45) Date of publication and mention
of the grant of the patent:
**22.02.2023 Bulletin 2023/08**

(21) Application number: **20754388.5**

(22) Date of filing: **06.08.2020**

(51) International Patent Classification (IPC):
*C09J 5/00* (2006.01)   *B29C 64/00* (2017.01)
*B33Y 70/10* (2020.01)   *C08K 3/01* (2018.01)
*C09J 9/00* (2006.01)   *C09J 11/04* (2006.01)
*B29C 48/05* (2019.01)   *B29C 48/21* (2019.01)
*B29C 48/92* (2019.01)   *B29C 64/118* (2017.01)
*D01D 5/34* (2006.01)   *D01F 1/10* (2006.01)
*D01F 8/10* (2006.01)

(52) Cooperative Patent Classification (CPC):
**C09J 11/04; B29C 48/05; B29C 48/21;
B29C 48/92; B29C 64/118; B33Y 70/10;
C09J 5/00; C09J 9/00; D01D 5/34; D01F 1/10;
D01F 8/10;** B33Y 10/00; C09J 2203/102;
C09J 2301/314; C09J 2301/408;           (Cont.)

(86) International application number:
**PCT/IB2020/057444**

(87) International publication number:
**WO 2021/028795 (18.02.2021 Gazette 2021/07)**

(54) **CORE-SHEATH FILAMENT WITH A THERMALLY CONDUCTIVE PRESSURE-SENSITIVE ADHESIVE CORE**

KERN-HÜLLE-FILAMENT MIT EINEM WÄRMELEITFÄHIGEN HAFTKLEBSTOFFKERN

FILAMENT DE TYPE ÂME-GAINE AVEC UN NOYAU ADHÉSIF SENSIBLE À LA PRESSION THERMIQUEMENT CONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2019 US 201962887054 P**

(43) Date of publication of application:
**22.06.2022 Bulletin 2022/25**

(73) Proprietor: **3M Innovative Properties Company**
Saint Paul, Minnesota 55133-3427 (US)

(72) Inventors:
• **KUGEL, Alexander J.**
Saint Paul, Minnesota 55133-3427 (US)
• **PEREZ, Mario A.**
Saint Paul, Minnesota 55133-3427 (US)
• **GORIS, Sebastian**
Saint Paul, Minnesota 55133-3427 (US)
• **FREY, Matthew H.**
Saint Paul, Minnesota 55133-3427 (US)
• **BEHLING, Ross E.**
Saint Paul, Minnesota 55133-3427 (US)
• **NAPIERALA, Mark E.**
Saint Paul, Minnesota 55133-3427 (US)
• **CHASTEK, Thomas Q.**
Saint Paul, Minnesota 55133-3427 (US)
• **YOUNG, Jacob D.**
Saint Paul, Minnesota 55133-3427 (US)
• **WEST, Shaun M.**
Saint Paul, Minnesota 55133-3427 (US)
• **UCHIYA, Tomoaki**
Tokyo 141--8684 (JP)

(74) Representative: **Bergen, Katja**
**3M Deutschland GmbH
OIPC
Carl-Schurz-Strasse 1
41453 Neuss (DE)**

EP 4 013 832 B1

(56) References cited:
**WO-A1-2017/212190**     **WO-A1-2018/199959**
**US-A1- 2019 144 715**

(52) Cooperative Patent Classification (CPC): (Cont.)
C09J 2400/10; C09J 2433/00

# Description

## Technical Field

A core-sheath filament having a core that is a thermally conductive pressure-sensitive adhesive and a thermoplastic, non-tacky sheath, methods of making the core-sheath filament, and methods of using the core-sheath filament to print a thermally conductive pressure-sensitive adhesive are described.

## Background

The use of fused filament fabrication (FFF) to produce three-dimensional articles has been known for a relatively long time, and these processes are generally known as methods of so-called 3D printing (or additive manufacturing). In FFF, a plastic filament is melted in a moving printhead to form a printed article in a layer-by-layer, additive manner. The filaments are often composed of polylactic acid, nylon, polyethylene terephthalate (typically glycol-modified), or acrylonitrile butadiene styrene.

WO 2017/212190 A1 discloses a core-sheath filament produced by coextrusion comprising a core that is a thermally conductive and comprises a thermoplastic polymeric material and thermally conductive particles and a sheath surrounding the core, wherein the sheath comprises a thermoplastic material.

Thermally conductive adhesives have been used in various applications.

## Summary

A core-sheath filament is provided that includes a) a core that contains a thermally conductive pressure-sensitive adhesive and b) a thermoplastic, non-tacky sheath. Additionally, methods of making the core-sheath filament and methods of using the core-sheath filament to print a thermally conductive pressure-sensitive adhesive are described. The core-sheath filaments with a pressure-sensitive adhesive core can be used in place of transfer adhesives to attach one substrate to another. The use of these core-sheath filaments can eliminate the cost and waste associated with release liners that are needed for transfer adhesives. Further, because the core contains a thermally conductive pressure-sensitive adhesive, the core-sheath filaments can be used to deposit thermal interface materials (TIMs) on a substrate.

In a first aspect, a core-sheath filament is provided that includes a) 90 to 99.9 weight percent of a core that is a thermally conductive pressure-sensitive adhesive and b) 0.1 to 10 weight percent of a sheath surrounding the core that contains a non-tacky thermoplastic material, wherein each amount is based on a total weight of the core-sheath filament. The core contains 1) 2 to 50 weight percent of a (meth)acrylate-based polymeric material and 2) 50 to 98 weight percent of thermally conductive particles based on a total weight of the core. The core-sheath filament has a longest cross-sectional distance in a range of 1 to 20 millimeters.

In a second aspect, a method of making a core-sheath filament is provided. The method includes forming (or providing) a core composition that is a thermally conductive pressure-sensitive adhesive. The core composition includes 1) 2 to 50 weight percent of a (meth)acrylate-based polymeric material and 2) 50 to 98 weight percent of thermally conductive particles based on a total weight of the core. The method further includes providing a sheath composition comprising a non-tacky thermoplastic material. The method still further includes wrapping the sheath composition around the core composition to form the core-sheath filament, wherein the core-sheath filament contains 90 to 99.9 weight percent of the core and 0.1 to 10 weight percent of the sheath based on a total weight of the core-sheath filament and wherein the core-sheath filament has a longest cross-sectional distance in a range of 1 to 20 millimeters.

In a third aspect, a method of printing a thermally conductive pressure-sensitive adhesive is provided. The method includes forming (or providing) a core-sheath filament as described above in the second aspect, melting and mixing the core-sheath filament to form a molten composition, and dispensing the molten composition onto a substrate.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

## Brief Description of the Drawings

FIG. 1 is a schematic perspective exploded view of a section of a core-sheath filament, according to an embodiment of the present disclosure.

FIG. 2 is a schematic cross-sectional view of a core-sheath filament, according to an embodiment of the present disclosure.

**Detailed Description**

A core-sheath filament having a pressure-sensitive adhesive core that is thermally conductive and a non-tacky sheath that surrounds the core is provided. The pressure-sensitive adhesive in the core includes a (meth)acrylate-based polymeric material and thermally conductive particles. The sheath contains a thermoplastic material. The core-sheath filament can be used in place of a transfer adhesive tape to attach one substrate to another. The use of the core-sheath filament can eliminate the cost and waste associated with release liners that are needed for transfer adhesive tapes.

Adhesive transfer tapes have been used extensively for adhering a first substrate to a second substrate. Adhesive transfer tapes are typically provided in rolls and contain a pressure-sensitive adhesive layer positioned on a two-side coated differential release liner or between two release liners. The transfer adhesive tapes often need to be die-cut to the desired size and shape prior to application to a substrate. The transfer adhesive tape that is outside the die-cut area is discarded as waste. The use of the core-sheath filaments described herein as the adhesive composition can substantially reduce the waste often associated with adhesive transfer tapes. No die-cutting is required because the adhesive can be deposited (e.g., printed) only in the desired area.

The core-sheath filaments can be used for printing a pressure-sensitive adhesive that is thermally conductive using fused filament fabrication (FFF). The material properties needed for FFF dispensing typically are significantly different than those required for hot-melt dispensing of a pressure-sensitive adhesive composition. For instance, in the case of traditional hot-melt adhesive dispensing, the adhesive is melted into a liquid inside a tank and pumped out through a hose and nozzle. Thus, traditional hot-melt adhesive dispensing requires a low-melt viscosity adhesive, which is often quantified as a high melt flow index adhesive. If the viscosity is too high (or the melt flow index (MFI) is too low), the hot-melt adhesive cannot be effectively transported from the tank containing the fluid composition to the nozzle where it is dispensed. In contrast, FFF involves melting a filament only within the nozzle at the point of dispensing, and therefore is not limited to low melt viscosity adhesives (high melt flow index adhesives) that can be easily pumped. In fact, a high melt viscosity adhesive (a low melt flow index adhesive) can advantageously provide geometric stability to a pressure-sensitive adhesive after dispensing, which allows for precise and controlled placement of the adhesive. The adhesive typically does not spread excessively after being printed.

In addition, FFF typically requires a suitable filament to have at least a certain minimum tensile strength so that large spools of filament can be continuously fed to a nozzle without breaking. The FFF filaments are usually spooled into level wound rolls. If a core-sheath filament is spooled into level wound rolls, the material nearest the core can be subjected to high compressive forces. Preferably, the core-sheath filament is resistant to permanent cross-sectional deformation (i.e., compression set) and self-adhesion (i.e., blocking during storage).

Additionally, the core-sheath filaments can be used to deposit thermal interface materials (TIMs) on a substrate. That is, the composition deposited is a thermally conductive pressure-sensitive adhesive that can function as a thermal interface material to transport thermal energy (also referred to as "heat") from a source having a relatively high temperature material or component (e.g., a battery, motor winding, or semiconductor device) to a sink having a relatively low temperature material or component (e.g., a finned heat sink, water jacket, or cold plate).

Compared to traditional hot-melt adhesive dispensing methods, printing methods based on the use of core-sheath filaments can be particularly advantageous for pressure-sensitive adhesives that contain a large amount of filler materials such as thermally conductive particles. As discussed above, traditional hot-melt adhesive dispensing involves melting a liquid inside a tank and then pumping the molten composition through a hose and nozzle. The fillers often settle within the tank. Maintaining the desired concentration of filler particles in the composition being dispensed can be challenging. In contrast, the thermally conductive particles in the core of the filament do not settle and the concentration of filler particles within the core can be substantially consistent along the length and width of the core-sheath filament.

Definitions:

The terms "a", "an", and "the" are used interchangeably with "at least one" to mean one or more of the elements being described. The phrases "at least one of" and "comprises at least one of" followed by a list refers to any one of the items in the list and any combination of two or more items in the list.

The term "and/or" means either or both. For example, the expression X and/or Y means X, Y, or a combination thereof (both X and Y).

The term "(meth)acryloyl" refers to a group of formula $H_2C=CR\text{-}(CO)\text{-}$ where R is hydrogen or methyl and (CO) is a carbonyl group.

The term "(meth)acrylate" refers to an acrylate, methacrylate, or both. Likewise, the term "(meth)acrylic aid" refers to a methacrylic acid, acrylic acid, or both and the term "(meth)acrylamide" refers to an acrylamide, methacrylamide, or both.

The terms "polymer" and "polymeric material" are used interchangeably and refer to materials prepared from one or more reactants (i.e., monomers). The polymer can be, for example, a homopolymer, copolymer, or terpolymer. Likewise, the term "polymerize" refers to the process of making a polymeric material from one or more reactants. The terms "copolymer" and "copolymeric material" are used interchangeably and refer to polymeric material prepared from at least two different reactants.

The term "thermoplastic" refers to a polymeric material that flows when heated sufficiently above its glass transition temperature and that becomes a solid when cooled.

As used herein, the terms "glass transition temperature" and "$T_g$" are used interchangeably and refer to the glass transition temperature of a material or a mixture. Unless otherwise indicated, glass transition temperature values are determined by Differential Scanning Calorimetry ("DSC").

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure.

As used herein, the term "pressure-sensitive adhesive" or "PSA" refers to a viscoelastic material that possesses the following properties: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature. Materials that are merely sticky or adhere to a surface do not constitute a PSA; the term PSA encompasses materials with additional viscoelastic properties. PSAs are adhesives that satisfy the Dahlquist criteria for tackiness, which means that the shear storage modulus is typically $3 \times 10^5$ Pa (300 kPa) or less when measured at 25°C and 1 Hertz (6.28 radians/second). PSAs typically exhibit adhesion, cohesion, compliance, and elasticity at room temperature.

As used herein, "core-sheath filament" refers to a composition in which a first material (i.e., the core) is surrounded by a second material (i.e., the sheath) such that the core and sheath have a common longitudinal axis. While the core and the sheath are typically concentric, the cross-sectional shape of the core can be any desired cross-sectional shape such as a circle, oval, square, rectangle, triangle, or the like.

The terms "core-sheath filament" and "filament" are used interchangeably. That is, the term "filament" includes both the core and the sheath.

The sheath surrounds the core in the core-sheath filament. In this context, "surround" (or similar words such as "surrounding") means that the sheath composition covers the entire perimeter (i.e., the cross-sectional perimeter) of the core for a major portion (e.g., at least 80 percent or more, at least 85 percent or more, at least 90 percent or more, or at least 95 percent or more) of the length (the long axis direction) of the filament. Surrounding is typically meant to imply that all but perhaps the very ends of the filament have the core covered completely by the sheath.

As used herein, the term "non-tacky" refers to a material that passes a "Self-Adhesion Test", in which the force required to peel the material apart from itself is at or less than a predetermined maximum threshold amount, without fracturing the material. The Self-Adhesion Test is described below and is typically performed on a sample of the sheath material to determine whether the sheath is non-tacky.

As used herein, "melt flow index" or "MFI" refers to the amount of polymer that can be pushed through a die at a specified temperature using a specified weight. Melt flow index can be determined using ASTM 1238-13 at 190°C and with a load (weight) of 2.16 kg. Some of the reported values for the melt flow index are available from vendors of the sheath material and others were measure by the applicants using Procedure A of the ASTM method. The vendor data was reported as having been determined using the same ASTM method as well as the same temperature and load.

The term "substantially", unless otherwise specifically defined, means to a high degree of approximation (e.g., within +/- 10% for quantifiable properties) but without requiring absolute precision or a perfect match. Terms such as same, equal, uniform, constant, strictly, and the like, are understood to be within the usual tolerances or measuring error applicable to the specific circumstance rather than requiring absolute precision or a perfect match.

As used herein, any statement of a range includes the endpoint of the range and all suitable values within the range (e.g., 1 to 5 includes 1, 1.5, 2, 2.75, 3, 3.80, 4, 5, etc.).

Core-sheath filaments

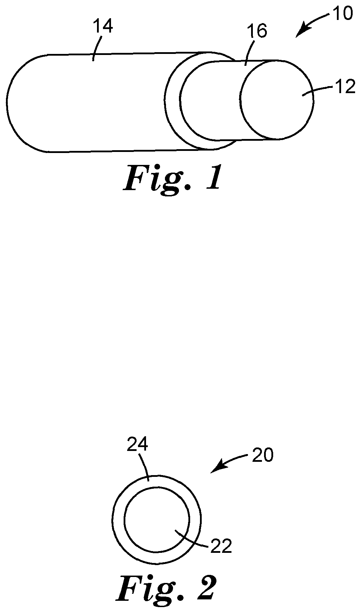

An example core-sheath filament 10 is shown schematically in FIG. 1. The filament includes a core 12 and a sheath 14 surrounding (encasing) the outer surface 16 of the core. FIG. 2 shows the core-sheath filament 20 in a cross-sectional view. The core 22 is surrounded by the sheath 24. Any desired cross-sectional shape can be used for the core. For example, the cross-sectional shape can be a circle, oval, square, rectangular, triangular, or the like. The cross-sectional area of the core 22 is typically larger than the cross-sectional area of the sheath 24. In addition to shape and area, the cross-section of the filament also includes cross-sectional distances. Cross-sectional distances are equivalent to the lengths of chords that join points on the perimeter of the cross-section. Longest cross-sectional distance refers to the greatest length of a chord that can be drawn through the cross-section of a filament, at a given location along its axis.

The core-sheath filament usually has a relatively small longest cross-sectional distance (e.g., the longest cross-sectional distance corresponds to the diameter for filaments that have a circular cross-sectional shape) so that it can be used in applications where precise deposition of a pressure-sensitive adhesive is needed or is advantageous. For instance, the core-sheath filament usually has a longest cross-sectional distance in a range of 1 to 20 millimeters (mm). The longest cross-sectional distance of the filament can be at least 1 mm, at least 2 mm, at least 3 mm, at least 4 mm, at least 5 mm, at least 6 mm, at least 8 mm, or at least 10 mm and can be up to 20 mm, up to 18 mm, up to 15 mm, up to 12 mm, up to 10 mm, up to 8 mm, up to 6 mm, or up to 5 mm. This average distance can be, for example, in a range of 2 to 20 mm, 5 to 15 mm, or 8 to 12 mm.

Often, 0.1 to 10 percent of the longest cross-sectional distance (e.g., diameter) of the core-sheath filament is contributed by the sheath and 90 to 99.9 percent of the longest cross-sectional distance (e.g., diameter) of the core-sheath filament is contributed by the core. For example, up to 10 percent, up to 8 percent, up to 6 percent, up to 5 percent, up to 4 percent, up to 2 percent, or up to 1 percent and at least 0.1 percent, at least 0.2 percent, at least 0.5 percent, at least 1 percent, or at least 2 percent of the longest cross-sectional distance of the filament can be contributed by the sheath with the remainder being contributed by the core. The sheath extends completely around the perimeter (e.g., circumference, in the case of a circular cross-section) of the core to prevent the core from sticking to itself. In some embodiments, however, the ends of the filament may contain only the core.

Often, the core-sheath filament has an aspect ratio of length to longest cross-sectional distance (e.g., diameter) of 50: 1 or greater, 100: 1 or greater, or 250:1 or greater. Core-sheath filaments having a length of at least about 20 feet (6 meters) can be especially useful for printing a pressure-sensitive adhesive. Depending on the application or use of the core-sheath filament, having a relatively consistent longest cross-sectional distance (e.g., diameter) over its length can be desirable. For instance, an operator might calculate the amount of material being melted and dispensed based on the expected mass of filament per predetermined length; but if the mass per length varies widely, the amount of material dispensed may not match the calculated amount. In some embodiments, the core-sheath filament has a maximum variation of longest cross-sectional distance (e.g., diameter) of 20 percent over a length of 50 centimeters (cm), or even a maximum variation in longest cross-sectional distance (e.g., diameter) of 15 percent over a length of 50 cm.

Core-sheath filaments described herein can exhibit a variety of desirable properties, both as prepared and as a pressure-sensitive adhesive composition. As formed, a core-sheath filament desirably has strength consistent with being handled without fracturing or tearing the sheath. The extent of structural integrity of the core-sheath filament needed varies according to the specific application of use. Preferably, a core-sheath filament has strength consistent with the requirements and parameters of one or more additive manufacturing devices (e.g., 3D printing systems). One additive manufacturing apparatus, however, could subject a core-sheath filament to a greater force when feeding the filament to a deposition nozzle than a different apparatus. As formed, the core-sheath filament desirably also has modulus and yield stress consistent with being handled without excessive or unintentional stretching.

Advantageously, the elongation at break of the neat sheath material of the core-sheath filament is typically 50 percent or greater, 60 percent or greater, 80 percent or greater, 100 percent or greater, 250 percent or greater, 400 percent or greater, 750 percent or greater, 1000 percent or greater, 1400 percent or greater, or 1750 percent or greater and 2000 percent or less, 1500 percent or less, 900 percent or less, 500 percent or less, or 200 percent or less. Stated another way, the elongation at break of the sheath material of the core-sheath filament can typically range from 50 percent to 2000 percent. In some embodiments, the elongation at break is at least 60 percent, at least 80 percent, or at least 100 percent. Elongation at break can be measured, for example, by the methods outlined in ASTM D638-14, using test specimen Type IV.

Advantages provided by at least certain embodiments of employing the core-sheath filament as a pressure-sensitive adhesive once it is melted and mixed include one or more of: low volatile organic compound ("VOC") characteristics, avoiding die cutting, design flexibility, achieving intricate non-planar bonding patterns, printing on thin and/or delicate substrates, and printing on an irregular and/or complex topography.

Any suitable method can be used to prepare the core-sheath filaments. Most methods include forming or providing a core composition that is a thermally conductive pressure-sensitive adhesive and that contains 1) 2 to 50 weight percent of a (meth)acrylate-based polymeric material and 2) 50 to 98 weight percent of thermally conductive particles based on a total weight of the core. These methods further include providing a sheath composition comprising a non-tacky thermoplastic material. These methods still further include wrapping the sheath composition around the core composition such that the core-sheath filament has a longest cross-sectional distance in a range of 1 to 20 millimeters and wherein the core-sheath filament contains 90 to 99.9 weight percent of the core and 0.1 to 10 weight percent of the sheath.

In many embodiments, the method of making the core-sheath filament includes co-extruding the core composition and the sheath composition though a coaxial die such that the sheath composition surrounds the core composition. Optional additives for the core composition, which is a thermally conductive pressure-sensitive adhesive composition, can be added in an extruder (e.g., a twin-screw extruder) equipped with a side stuffer that allows for the inclusion of additives. Similarly, optional additives can be added to a sheath composition in the extruder. The thermally conductive pressure-sensitive adhesive core can be extruded through the center portion of a coaxial die having an appropriate diameter while the non-tacky sheath can be extruded through the outer portion of the coaxial die. One suitable die is a filament spinning die as described in U.S. Patent No. 7,773,834 (Ouderkirk et al.). Optionally, the filament can be cooled upon extrusion using a water bath. The filament can be lengthened using a belt puller. The speed of the belt puller can be adjusted to achieve a desired filament diameter.

In other embodiments, the core can be formed by extrusion of the core composition. The resulting core can be rolled within a sheath composition having a size sufficient to surround the core. In still other embodiments, the core composition can be formed as a sheet. A stack of the sheets can be formed having a thickness suitable for the core. A sheath composition can be positioned around the stack such that the sheath composition surrounds the stack.

Without wishing to be bound by theory, it is believed that the overall final adhesive material property of a dispensed core-sheath filament will demonstrate viscoelasticity (i.e., stress relaxation over time). On the other hand, a desirable property of the sheath material is its ability to hold energy under a static load, showing minimal stress dissipation over time. A low MFI and a high tensile strength help prevent the core-sheath filament from breaking when subjected to high inertial forces, such as when the core-sheath is starting to be unspooled.

Suitable components of the core-sheath filament are described in detail below.

Core

The core of the core-sheath filament is a pressure-sensitive adhesive and contains both a (meth)acrylate-based polymeric material and thermally conductive particles. More specifically, the core is a thermally conductive pressure-sensitive adhesive. The thermally conductive materials are substantially uniformly distributed throughout the core.

The (meth)acrylate-based polymeric material is typically a polymeric material that is formed from one or more monomers having a (meth)acryloyl group. Suitable monomers having a single (meth)acryloyl groups include, but are not limited to, alkyl (meth)acrylates, fluorinated alkyl (meth)acrylates, aryl (meth)acrylates, aralkyl (meth)acrylates, substituted aryl (meth)acrylates, (meth)acrylic acid, (meth)acrylamide, N-alkyl (meth)acrylamide, N,N-dialkyl (meth)acrylamide, N-alkylaminoalkyl (meth)acrylate, N,N-dialkylaminoalkyl (meth)acrylate, N-alkylaminoalkyl (meth)acrylamide, N,N-dialkylaminoalkyl (meth)acrylamide, hydroxy-substituted alkyl (meth)acrylates, hydroxy-substituted alkyl (meth)acrylamides, alkoxylated alkyl (meth)acrylate, acid-substituted alkyl (meth)acrylates, acid-substituted alkyl (meth)acrylamides, glycidyl-containing (meth)acrylates, aminosulfonyl-containing (meth)acrylates, and mixtures thereof.

Typically, at least 55 weight percent, at least 60 weight percent, at least 70 weight percent, at least 80 weight percent and up to 100 weight percent, up to 99 weight percent, up to 98 weight percent, up to 95 weight percent, up to 90 weight percent, up to 85 weight percent, or up to 80 weight percent of the monomers in the monomer composition used to form the (meth)acrylate-based polymeric material have a (meth)acryloyl group.

The (meth)acrylate-polymeric material included in the core of the core-sheath filament is typically a viscoelastic material. The viscoelastic material usually has a glass transition temperature (Tg) that is no greater than 20°C, no greater than 10°C, no greater than 0°C, no greater than -10°C, or no greater than -20°C. The glass transition temperature can be measured using techniques such as Differential Scanning Calorimetry and Dynamic Mechanical Analysis. Alternatively, the glass transition temperature can be estimated using the Fox equation. Lists of glass transition temperatures for homopolymers are available from multiple monomer suppliers such as from BASF Corporation (Houston, TX, USA), Polyscience, Inc. (Warrington, PA, USA), and Aldrich (Saint Louis, Missouri, USA) as well as in various publications such as, for example, Mattioni et al., J. Chem. Inf. Comput. Sci., 2002, 42, 232-240.

To form a viscoelastic polymeric material, the monomer composition usually contains at least one low Tg monomer. As used herein, the term "low Tg monomer" refers to a monomer having a Tg no greater than 20°C when homopolymerized (i.e., a homopolymer that is formed from the low Tg monomer has a Tg no greater than 20°C). Suitable low Tg monomers are often selected from an alkyl (meth)acrylates, heteroalkyl (meth)acrylates, aryl substituted alkyl acrylate, and aryloxy substituted alkyl acrylates.

Example low Tg alkyl (meth)acrylate monomers often are non-tertiary alkyl acrylates but can be an alkyl methacrylates having a linear alkyl group with at least 4 carbon atoms. Specific examples of alkyl (meth)acrylates include, but are not limited to, methyl acrylate, ethyl acrylate, n-propyl acrylate, n-butyl acrylate, n-butyl methacrylate, isobutyl acrylate, sec-butyl acrylate, n-pentyl acrylate, 2-methylbutyl acrylate, n-hexyl acrylate, cyclohexyl acrylate, 4-methyl-2-pentyl acrylate, 2-methylhexyl acrylate, 2-ethylhexyl acrylate, n-octyl acrylate, 2-octyl acrylate, isooctyl acrylate, isononyl acrylate, isoamyl acrylate, n-decyl acrylate, isodecyl acrylate, n-decyl methacrylate, lauryl acrylate, isotridecyl acrylate, n-octadecyl acrylate, isostearyl acrylate, and n-dodecyl methacrylate.

Example low Tg heteroalkyl (meth)acrylate monomers often have at least 3 carbon atoms, at least 4 carbon atoms, or at least 6 carbon atoms and can have up to 30 or more carbon atoms, up to 20 carbon atoms, up to 18 carbon atoms, up to 16 carbon atoms, up to 12 carbon atoms, or up to 10 carbon atoms. Specific examples of heteroalkyl (meth)acrylates include, but are not limited to, 2-ethoxyethyl acrylate, 2-(2-ethoxyethoxy)ethyl acrylate, 2-methoxyethyl (meth)acrylate, and tetrahydrofurfuryl (meth)acrylate.

Exemplary aryl substituted alkyl acrylates or aryloxy substituted alkyl acrylates include, but are not limited to, 2-biphenylhexyl acrylate, benzyl acrylate, 2-phenoxyethyl acrylate, and 2-phenylethyl acrylate.

In many embodiments, the monomer composition contains at least 45 weight percent, at least 50 weight percent, at least 60 weight percent, at least 65 weight percent, at least 70 weight percent, at least 75 weight percent, or at least 80 weight percent and up to 100 weight percent, up to 99 weight percent, up to 98 weight percent, up to 95 weight percent, up to 90 weight percent, or up to 85 weight percent of the low Tg monomer.

Some monomer compositions include an optional polar monomer. The polar monomer has an ethylenically unsaturated group plus a polar group such as an acidic group, a hydroxyl group, a primary amido group, a secondary amido group, a tertiary amido group, or an amino group. Having a polar monomer often facilitates adherence of the pressure-sensitive adhesive to a variety of substrates.

Exemplary polar monomers with an acidic group include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropanesulfonic acid, vinyl phosphonic acid, and mixtures thereof. Due to their availability, the acid monomers are often (meth)acrylic acids.

Exemplary polar monomers with a hydroxyl group include, but are not limited to, hydroxyalkyl (meth)acrylates (e.g., 2-hydroxyethyl (meth)acrylate, 2-hydroxypropyl (meth)acrylate, 3-hydroxypropyl (meth)acrylate, and 4-hydroxybutyl (meth)acrylate), hydroxyalkyl (meth)acrylamides (e.g., 2-hydroxyethyl (meth)acrylamide or 3-hydroxypropyl (meth)acrylamide), ethoxylated hydroxyethyl (meth)acrylate (e.g., monomers commercially available from Sartomer (Exton, PA, USA) under the trade designation CD570, CD571, and CD572), and aryloxy substituted hydroxyalkyl (meth)acrylates (e.g., 2-hydroxy-2-phenoxypropyl (meth)acrylate).

Exemplary polar monomers with a primary amido group include (meth)acrylamide. Exemplary polar monomers with secondary amido groups include, but are not limited to, N-alkyl (meth)acrylamides such as N-methyl (meth)acrylamide, N-ethyl (meth)acrylamide, N-isopropyl (meth)acrylamide, N-tert-octyl (meth)acrylamide, or N-octyl (meth)acrylamide.

Exemplary polar monomers with a tertiary amido group include, but are not limited to, N-vinyl caprolactam, N-vinyl-2-pyrrolidone, (meth)acryloyl morpholine, and N,N-dialkyl (meth)acrylamides such as N,N-dimethyl (meth)acrylamide, N,N-diethyl (meth)acrylamide, N,N-dipropyl (meth)acrylamide, and N,N-dibutyl (meth)acrylamide.

Polar monomers with an amino group include various N,N-dialkylaminoalkyl (meth)acrylates and N,N-dialkylaminoalkyl (meth)acrylamides. Examples include, but are not limited to, N,N-dimethyl aminoethyl (meth)acrylate, N,N-dimethylaminoethyl (meth)acrylamide, N,N-dimethylaminopropyl (meth)acrylate, N,N-dimethylaminopropyl (meth)acrylamide, N,N-diethylaminoethyl (meth)acrylate, N,N-diethylaminoethyl (meth)acrylamide, N,N-diethylaminopropyl (meth)acrylate, and N,N-diethylaminopropyl (meth)acrylamide.

The amount of the optional polar monomer is often in a range of 0 to 30 weight percent based on the weight of monomers in the monomer composition. If present, the amount of polar monomers in the monomer composition is often at least 0.1 weight percent, at least 0.5 weight percent, or at least 1 weight percent based on the total weight of monomers in monomer composition. The amount can be up to 30 weight percent, up to 25 weight percent, up to 20 weight percent, up to 15 weight percent, up to 10 weight percent, or up to 5 weight percent. For example, the amount is often in a range of 0 to 30 weight percent, in a range of 0 to 20 weight percent, in a range of 0 to 15 weight percent, in a range of 0 to 10 weight percent, in a range of 0 to 5 weight percent, in a range of 0.1 to 15 weight percent, in the range of 0.5 to 15 weight percent, in a range of 1 to 15 weight percent, or in a range of 1 to 10 weight percent based on a total weight of monomers in monomer composition.

The monomer composition can optionally include a high Tg monomer. As used herein, the term "high Tg monomer" refers to a monomer that has a Tg greater than 30°C, greater than 40°C, or greater than 50°C when homopolymerized (i.e., a homopolymer that is formed from the monomer has a Tg greater than 30°C, greater than 40°C, or greater than 50°C). Some suitable high $T_g$ monomers have a single (meth)acryloyl group such as, for example, methyl methacrylate, ethyl methacrylate, n-propyl methacrylate, isopropyl methacrylate, n-butyl methacrylate, isobutyl methacrylate, sec-butyl methacrylate, tert-butyl (meth)acrylate, cyclohexyl methacrylate, isobornyl (meth)acrylate, stearyl (meth)acrylate, phenyl acrylate, benzyl methacrylate, 3,3,5 trimethylcyclohexyl (meth)acrylate, 2-phenoxyethyl methacrylate, N-octyl (meth)acrylamide, and mixtures thereof. Other suitable high Tg monomers have a single vinyl group that is not a (meth)acryloyl group such as, for example, various vinyl ethers (e.g., vinyl methyl ether), vinyl esters (e.g., vinyl acetate and vinyl propionate), styrene, substituted styrene (e.g., α-methyl styrene), vinyl halide, and mixtures thereof. Vinyl monomers having a group characteristic of polar monomers are considered herein to be polar monomers.

The amount of high Tg monomer used to form the (meth)acrylate-based polymeric material can be up to 50 weight percent or even higher provided that the Tg of the polymeric material is no greater than 20°C. In some embodiments, the amount can be up to 40 weight percent, up to 30 weight percent, up to 20 weight percent, up to 15 weight percent, or up to 10 weight percent. The amount can be at least 1 weight percent, at least 2 weight percent, or at least 5 weight percent. For example, the amount can be in a range of 0 to 50 weight percent, 0 to 40 weight percent, 0 to 30 weight percent, 0 to 20 weight percent, 0 to 10 weight percent, 1 to 30 weight percent, 1 to 20 weight percent, or 1 to 10 weight percent. The amount values are based on a total weight of monomers in monomer composition.

Still further, the monomer composition can optionally include a vinyl monomer (i.e., a monomer with an ethylenically unsaturated group that is not a (meth)acryloyl group). Examples of optional vinyl monomers include, but are not limited to, various vinyl ethers (e.g., vinyl methyl ether), vinyl esters (e.g., vinyl acetate and vinyl propionate), styrene, substituted styrene (e.g., α-methyl styrene), vinyl halide, and mixtures thereof. The vinyl monomers having a group characteristic of polar monomers are considered herein to be polar monomers.

The amount of the optional vinyl monomer lacking a (meth)acryloyl group is often in a range of 0 to 15 weight percent based on the weight of monomers in monomer composition. If present, the amount of vinyl monomers in the monomer composition is often at least 0.1 weight percent, 0.2 weight percent, 0.5 weight percent, or 1 weight percent based on the total weight of monomers in the first monomer composition. The amount can be up to 15 weight percent, up to 10 weight percent, or up to 5 weight percent. For example, the amount is often in a range of 0 to 15 weight percent, in a range of 0.1 to 10 weight percent, in a range of 0.5 to 5 weight percent, or in a range of 1 to 5 weight percent based on a total weight of monomers in the monomer composition.

Overall the viscoelastic (meth)acrylate-based polymeric material can be formed from a monomer composition that includes up to 100 weight percent of the low Tg monomer. In some embodiments, the monomer composition contains 100 weight percent low Tg monomer based on the total weight of monomers in the monomer composition. In other embodiments, the monomer composition contains 40 to 100 weight percent of the low Tg monomer, 0 to 30 weight percent polar monomer, 0 to 50 weight percent high Tg monomer, and 0 to 15 weight percent vinyl monomers not having a (meth)acryloyl group. In still other embodiments, the monomer composition contains 60 to 100 weight percent of the low Tg monomer, 0 to 20 weight percent polar monomer, 0 to 40 weight percent high Tg monomer, and 0 to 10 weight percent vinyl monomers not having a (meth)acryloyl group. In yet other embodiments, the monomer composition contains 75 to 100 weight percent of the low Tg monomer, 0 to 10 weight percent polar monomer, 0 to 25 weight percent high Tg monomer, and 0 to 5 weight percent vinyl monomers not having a (meth)acryloyl group.

The resulting viscoelastic (meth)acrylate-based polymeric material contains up to 100 weight percent or 100 weight percent low Tg monomer units. The weight percent value is based on the total weight of monomeric units in the polymeric material. In some embodiments, the polymeric material contains 40 to 100 weight percent of the low Tg monomeric units, 0 to 15 weight percent polar monomeric units, 0 to 50 weight percent high Tg monomeric units, and 0 to 15 weight percent vinyl monomeric units. In still other embodiments, the polymer contains 60 to 100 weight percent of the low Tg monomeric units, 0 to 10 weight percent polar monomeric units, 0 to 40 weight percent high Tg monomeric units, and 0 to 10 weight percent vinyl monomeric units. In yet other embodiments, the polymer contains 75 to 100 weight percent of the low Tg monomeric units, 0 to 10 weight percent polar monomeric units, 0 to 25 weight percent high Tg monomeric units, and 0 to 5 weight percent vinyl monomeric units.

The use of a polar monomer can be advantageous in some uses of the core-sheath filament. For example, the polar monomer may increase adhesion of the pressure-sensitive adhesive to various substrates. In some embodiments, the viscoelastic (meth)acrylate-based polymeric material contains 75 to 100 weight percent of the low Tg monomeric units, 1 to 15 weight percent polar monomeric units, 0 to 25 weight percent high Tg monomeric units, and 0 to 5 weight percent vinyl monomeric units. The polar monomer is often selected to be an acidic monomer or a basic monomer.

In some embodiments, the core contains two different (meth)acrylate-based polymeric materials. For example, the core contains a first (meth)acrylate-based polymeric materials having acidic groups and second (meth)acrylate-based polymeric material having basic groups. The basic groups can interact with the acid group increasing the strength of the pressure-sensitive adhesive. The first (meth)acrylate-based polymeric material may be mixed with the second (meth)acrylate-based polymeric material within the core or the core can have multiple layers with the first (meth)acrylate-based polymeric material being in a first layer and the second (meth)acrylate-based polymeric material being in a second layer. Having two different layers in the core may be advantageous because the flow viscosity of the core may be lower. The separate layers may be provided by appropriate design of an extrusion die. Alternatively, two separate cores can be prepared and then surrounded by a common sheath composition.

In addition to the monomers used to form the various monomeric units described above, the polymerizable composition used to prepare the (meth)acrylate copolymer typically includes a free radical initiator to commence polymerization of the monomers in the monomer composition. The free radical initiator can be a photoinitiator or a thermal initiator. The amount of the free radical initiator is often in a range of 0.05 to 5 weight percent based on a total weight of monomers used.

Suitable thermal initiators include various azo compound such as those commercially available under the trade designation VAZO from E. I. DuPont de Nemours Co. (Wilmington, DE, USA) including VAZO 67, which is 2,2'-azobis(2-methylbutane nitrile), VAZO 64, which is 2,2'-azobis(isobutyronitrile), VAZO 52, which is (2,2'-azobis(2,4-dimethylpentanenitrile)) and VAZO 88, which is 1,1'-azobis(cyclohexanecarbonitrile); various peroxides such as benzoyl peroxide, cyclohexane peroxide, lauroyl peroxide, di-tert-amyl peroxide, tert-butyl peroxy benzoate, dicumyl peroxide, and peroxides commercially available from Atofina Chemicals, Inc. (Philadelphia, PA) under the trade designation LUPEROX (e.g., LUPEROX 101, which is 2,5-bis(tert-butylperoxy)-2,5-dimethylhexane, and LUPEROX 130, which is 2,5-dimethyl-2,5-di-(tert-butylperoxy)-3-hexyne); various hydroperoxides such as tert-amyl hydroperoxide and tert-butyl hydroperoxide; and mixtures thereof.

In some embodiments, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ, USA) or under the trade designation ESACURE KB-1 from Sartomer (Exton, PA, USA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxycyclohexyl phenyl ketone (commercially available under the trade designation IRGACURE 184), bis(2,4,6-trimethylbenzoyl)phenylphosphineoxide (commercially available under the trade designation IRGACURE 819), 2,4,6-trimethylbenzoylphenylphosphinic acid ethyl ester (commercially available under the trade designation IRGACURE TPO-L), 1-[4-(2-hydroxyethoxy)phenyl]-2-hydroxy-2-methyl-1-propane-1-one (commercially available under the trade designation IRGACURE 2959), 2-benzyl-2-dimethylamino-1-(4-morpholinophenyl)butanone (commercially available under the trade designation IRGACURE 369), 2-methyl-1-[4-(methylthio)phenyl]-2-morpholinopropan-1-one (commercially available under the trade designation IRGACURE 907), and 2-hydroxy-2-methyl-1-phenyl propan-1-one (commercially available under the trade designation DAROCUR 1173 from Ciba Specialty Chemicals Corp. (Tarrytown, NY, USA)).

The polymerizable composition may optionally further contain a chain transfer agent to control the molecular weight of the resultant (meth)acrylate copolymer. Examples of useful chain transfer agents include, but are not limited to, carbon tetrabromide, alcohols (e.g., ethanol and isopropanol), mercaptans or thiols (e.g., lauryl mercaptan, butyl mercaptan, tert-dodecyl mercaptan, ethanethiol, isooctyl thioglycolate, 2-ethylhexyl thioglycolate, 2-ethylhexyl mercaptopropionate, ethylene glycol bisthioglycolate), and mixtures thereof. If used, the polymerizable mixture may include up to 1 weight percent of a chain transfer agent based on a total weight of monomers. The amount can be up to 0.5 weight percent, up to 0.3 weight percent, up to 0.2 weight percent, or up to 0.1 weight percent and is often equal to at least 0.005 weight percent, at least 0.01 weight percent, at least 0.05 weight percent, or at least 0.1 weight percent. For example, the polymerizable composition can contain 0.005 to 0.5 weight percent, 0.01 to 0.5 weight percent, 0.05 to 0.2 weight percent, 0.01 to 0.2 weight percent, or 0.01 to 0.1 weight percent chain transfer agent based on the total weight of monomers.

The polymerizable composition can further include other components such as, for example, antioxidants and/or stabilizers such as hydroquinone monomethyl ether (p-methoxyphenol, MeHQ), and those available under the trade designation IRGANOX 1010 (tetrakis(methylene(3,5-di-tert-butyl-4-hydroxyhydrocinnamate))methane) from BASF Corp. (Florham Park, NJ, USA). The antioxidant and/or stabilizer can be used to increase the temperature stability of the resulting (meth)acrylate copolymer. If used, an antioxidant and/or stabilizer is typically used in the range of 0.01 percent by weight (weight percent) to 1.0 weight percent, based on the total weight of monomers in die polymerizable composition.

The polymerization of the polymerizable composition can occur in the presence or absence of an organic solvent. If an organic solvent is included in the polymerizable composition, the amount is often selected to provide the desired viscosity to the polymerizable composition and to the polymerized composition. Examples of suitable organic solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. Those solvents can be used alone or combined as mixtures. In some embodiments, the organic solvent is present in amount less than 15 weight percent, less than 10 weight percent, less than 8 weight percent, less than 6 weight percent, less than 5 weight percent, or less than 2 weight percent based on the total weight of the polymerizable composition. If used, any organic solvent typically is usually removed at the completion of the polymerization reaction. In many embodiments, the polymerization occurs with little or no organic solvent present. That is the polymerizable composition is free of organic solvent or contains a minimum amount of organic solvent.

The (meth)acrylate-based polymeric material can be prepared by any conventional polymerization method (such as solution polymerization or emulsion polymerization) including thermal bulk polymerization under adiabatic conditions, as is disclosed in U.S. Pat. Nos. 5,637,646 (Ellis) and 5,986,011 (Ellis et al.). Other methods of preparing either type of (meth)acrylate copolymer include the continuous free radical polymerization methods described in U.S. Pat. Nos. 4,619,979 and 4,843,134 (Kotnour et al.) and the polymerization within a polymeric package as described in U.S. Pat. No. 5,804,610 (Hamer et al.).

The (meth)acrylate-based polymeric material often has a weight average molecular weight, which can be determined using Gel Permeation Chromatography, that is in a range of 50,000 to 500,000 Daltons. For example, the weight average molecular weight can be at least 50,000 Daltons, at least 60,000 Daltons, at least 80,000 Daltons, at least 100,000 Daltons, at least 120,000 Daltons, at least 150,000 Daltons, at least 180,000 Daltons, at least 200,000 Daltons and up to 500,000 Daltons, up to 400,000 Daltons, up to 300,000 Daltons, up to 200,000 Daltons, up to 150,000 Daltons, or up to 100,000 Daltons.

The core contains 2 to 50 weight percent of the (meth)acrylate-based polymeric material. The amount is at least 2 weight percent, at least 3 weight percent, at least 4 weight percent, at least 5 weight percent, at least 6 weight percent, at least 7 weight percent, at least 8 weight percent, at least 9 weight percent, at least 10 weight percent, at least 15 weight percent, at least 20 weight percent, or at least 25 weight percent and up to 50 weight percent, up to 45 weight percent, up to 40 weight percent, up to 35 weight percent, up to 30 weight percent, up to 25 weight percent, or up to 20 weight percent based on the total weight of the core.

The (meth)acrylate-based polymeric material is typically tacky. If desired, however, optional tackifiers can be mixed with the (meth)acrylate-based polymeric material to alter (e.g., to increase) its tackiness. Useful tackifiers include, for example, rosin ester resins, aromatic hydrocarbon resins, aliphatic hydrocarbon resins, and terpene resins. Tackifiers are often mixed in an amount that is less than or equal to the amount of the (meth)acrylate-based polymeric material included in the core. The amount of the optional tackifier is often in a range of 0 to 25 weight percent, 0 to 20 weight percent, 0 to 15 weight percent, or 0 to 10 weight percent based on the total weight of the core.

The core also contains thermally conductive particles. That is, the core of the core-sheath filament contains a thermally conductive pressure-sensitive adhesive. The amount of thermally conductive particles in the core composition is typically in a range of 50 to 98 weight percent based on the weight of the core, which typically is the weight of the sum of the (meth)acrylate-based polymeric material and the thermally conductive particles. The amount of the thermally conductive particles in the core can be at least 50 weight percent, at least 55 weight percent, at least 60 weight percent, at least 65 weight percent, at least 70 weight percent, at least 75 weight percent, at least 80 weight percent, at least 85 weight percent, or at least 90 weight percent and up to 98 weight percent, up to 97 weight percent, up to 96 weight percent, up to 95 weight percent, up to 94 weight percent, up to 93 weight percent, up to 92 weight percent, up to 91 weight percent, up to 90 weight percent, up to 85 weight percent, or up to 80 weight percent based on the total weight of the core.

The thermally conductive particles can be a single type (i.e., composition) of thermally conductive particles or can include a plurality (i.e., more than one) of different types of thermally conductive particles. Further, the thermally conductive particles can contain a single distribution of thermally conductive particle sizes (i.e., the size distribution is a mono-modal size distribution). Alternatively, the thermally conductive particles can have a multi-modal size distribution. For example, the thermally conductive particles can have a bi-modal size distribution or a tri-modal size distribution. The multi-modal size distributions can result from a mixture of different types of thermally conductive particles that have different sizes, from a mixture of the same type of thermally conductive particles that have different sizes, or from both.

Useful thermally conductive particles include, for example, those made from or that contain diamond, polycrystalline diamond, silicon carbide, silicon nitride, aluminum oxide, boron nitride (hexagonal or cubic), boron carbide, silica (silicon dioxide), graphite, amorphous carbon, aluminum nitride, aluminum hydroxide (e.g., aluminum trihydroxide (ATH)), aluminum, aluminum silicate, zinc oxide, zirconium oxide, tin oxide, copper oxide, chromium oxide, titanium oxide, magnesium hydroxide, magnesium oxide, calcium hydroxide, calcium carbonate, barium titanate, carbon nanotubes, carbon black, carbon fibers, clay, nickel, tungsten, copper, silver, gold, nickel, platinum, and combinations of any of them. Each of these particles is of a different type.

For some applications, the thermally conductive core composition is designed to have (a) maximum bulk thermal conductivity and (b) minimum contact thermal resistance for the interface that the molten composition of the filament, which contains both the core composition and the sheath composition, makes with the substrate to which it is applied. The substrate to which the molten composition is applied is either a heat source or a heat sink. Practically achievable levels of both bulk thermal conductivity and contact thermal resistance are influenced by the flow behavior of the molten composition. The flow behavior of the molten composition at a given loading of thermally conductive particles (which largely controls the bulk thermal conductivity) can be strongly influenced by the selection of particle size distribution (PSD) of the thermally conductive materials in the core composition.

If the deposited thermally conductive pressure-sensitive adhesive is to function as a thermal interface material (TIM) that can transport thermal energy from a source having a relatively high temperature material or component (e.g., a battery, motor winding, or semiconductor device) to a sink having a relatively low temperature material or component (e.g., a finned heat sink, water jacket, or cold plate), it is often preferable that the TIM exhibit low total thermal resistance to the transport of that thermal energy. The total resistance of the TIM includes its bulk thermal resistance plus the thermal contact resistances between the TIM and the source and between the TIM and the sink. Thus, preferred thermal interface materials typically have a low bulk thermal resistance (as follows from high bulk thermal conductivity), low thermal contact resistance, or both. Both the bulk thermal resistance and the thermal contact resistance can be altered, for example, by the composition and the particle size distribution of the thermally conductive particles.

For the thermally conductive pressure-sensitive adhesive prepared herein, higher bulk thermal conductivity (i.e., conductivity of the thermally conductive pressure-sensitive adhesive) can be achieved by increasing the weight percent (or volume percent) of thermally conductive particles in the core of the filament. However, higher amounts of thermally conductive particles can increase the viscosity of the molten composition that is dispensed onto a substrate. This increase in viscosity with higher loading levels of the thermally conductive particles ultimately sets the upper limit on the amount of thermally conductive particles that can be present in the molten composition (and thus the thermal conductivity of the deposited thermally conductive pressure-sensitive adhesive) owing to challenges in processing that arise, for example, during extrusion, mixing, and dispensing. The combination of relatively low viscosity and relatively high loading levels can be obtained, however, by selection of appropriate particle size distributions for the thermally conductive particles.

Low thermal contact resistance of the thermal interface material (in this case, the deposited thermally conductive pressure-sensitive adhesive) can be achieved if the thermally conductive pressure-sensitive adhesive has intimate physical contact with the heat source and the heat sink between which it is positioned. Intimate physical contact is driven by the phenomenon of wet-out, whereby the thermal interface material, when placed into contact with the source or sink surface, excludes any residual bulk gas (e.g., air) or liquid (including oils) that might otherwise persist between the them. The residual bulk gas or liquid is excluded when the thermal interface material wets out against the source or sink surface. Wet-out against a source or sink surface occurs more readily for thermal interface materials having a low viscosity compared to thermal interface materials having a high viscosity. Accordingly, for a given loading of the thermally conductive particles, but especially for pressure-sensitive adhesive compositions containing a high loading of thermally conductive materials that are designed to provide a high bulk thermal conductivity, it is typically desirable that the thermally conductive pressure-sensitive adhesive have a low viscosity in its fluid state. The particle size distribution of the thermally conductive particles can be selected to advantageously provide low viscosity at high loading levels (e.g., at least 80 percent loading of the thermally conductive particles in the molten composition).

As the weight percent of thermally conductive filler is increased such as, for example, to levels greater than or equal to 80 weight percent based on the total weight of the core, it can be advantageous to use a mixture of thermally conductive particles having a multi-modal size distribution of the particles. The multi-modal size distribution, which are often bi-modal or tri-modal, can include a mixture of different sizes of the same or different types of thermally conductive particles. That is, the thermally conductive particles can be a mixture of at least two and preferably at least three different size distributions of thermally conductive particles.

Particle size distributions (PSDs) that are multimodal enable the core-sheath filaments to be used for printing thermally conductive pressure-sensitive adhesives suitable for use as thermal interface materials. More specifically, the use of thermally conductive particles with a multi-modal PSD (versus thermally conductive particles with a nominally mono-modal PSD) can be used to achieve high loading of thermally conductive particles (with the associated high bulk thermal conductivity) while preserving good flow behavior of the composition when in the fluid (e.g., molten) state.

While not wishing to be bound by theory, the small particles in the multi-modal distribution may reside or migrate (during flow) into the interstices between larger particles, thus increasing total loading. Good flow behavior is helpful in processing (e.g., dispensing at relatively low pressures) and wet-out to achieve high bulk thermal conductivity and low contact thermal resistance.

The flow of the thermally conductive pressure-sensitive adhesive can be evaluated using various rheological methods such as dynamic mechanical analysis (DMA). DMA can be used to investigate the viscoelastic behavior of a material by applying a sinusoidal stress and measuring the corresponding strain in the material. Both storage modulus G' and loss modulus G" can be determined. The storage modulus G' provides insight into stored energy while the loss modulus G" describes the dissipated energy during the deformation process. In other words, the storage modulus is a measure of the elastic response of a material while the loss modulus measures the viscous response. The ratio of loss modulus and storage modulus, which is referred to as the tangent of delta (also referred to herein as tan delta), is a measure of material damping. Delta is the phase angle between torque and displacement. The larger the tan delta, the more viscous (vs. elastic) a material behaves and the better its processability in the molten state. Desirably, the tan delta is at least 1, at least 2, at least 3, or at least 4 at 125°C. Higher tan delta values are usually desirable for good flow characteristics.

For multi-modal particle size distributions, each of the at least two or at least three size distributions preferably has an average particle size which differs from the average particle size of the distribution above and/or below it by at least a factor of 5, and in other embodiments, at least a factor of 7.5 or at least a factor of 10, or greater than a factor of 10. For example, a mixture of thermally conductive particles may consist essentially of: a smallest particle distribution having an average particle diameter ($D_{50}$) of 0.3 micrometers, a middle distribution having an average particle diameter ($D_{50}$) of 3.0 micrometers, and a largest distribution having an average particle diameter ($D_{50}$) of 30 micrometers. The latter example is one where the middle distribution has an average particle size of the distribution which differs from the average particle sizes of both the distribution above it and the distribution below it by a factor of 10. Another example may have average diameter particle distributions having average particle diameter ($D_{50}$) values of 0.03 micrometers, 0.3 micrometers, and 3 micrometers.

The thermally conductive particles are often a mixture of at least three distributions of thermally conductive particles resulting in at least a tri-modal distribution. In such a tri-modal distribution, the minima between the peaks (distance between the baseline of the peaks and the lowest point of the valley between distribution peaks) may be no more than 75 percent, no more than 50 percent, no more than 20 percent, no more than 10 percent, or no more than 5 percent of the interpolated value (height) between adjacent peaks. In some embodiments, the three size distributions are essentially non-overlapping. "Essentially non-overlapping" means that the lowest point of the valley is no more than 5 percent of the interpolated value between adjacent peaks. In other embodiments, the three distributions have only a minimal overlap. "Minimal overlap" means that the lowest point of the valley is no more than 20 percent of the interpolated value between adjacent peaks.

Typically, for a tri-modal distribution, the average particle size for the third smallest (or smaller) average diameter may range from about 0.02 to about 5.0 micrometers (μm). Typically, the average particle size for the middle average diameter may range from about 0.10 to about 50.0 μm. Typically, the average particle size for the largest average diameter may range from about 0.5 to about 500 μm.

In some embodiments, it is desirable to use the maximum possible volume fraction (or weight fraction) of the thermally conductive particles that is consistent with the desirable physical properties of the core-sheath filament or the pressure-sensitive adhesive. That is, the molten composition exiting the nozzle of the FFF apparatus can conform to the substrate surface and has sufficient flow for easy application to the substrate.

In some embodiments, the thermally conductive particle size distributions may be selected in accordance with the following general principles. The distribution of largest diameter particles should have diameters that are smaller than, or that nearly bridge, the expected gap between the two substrates to be thermally connected. Indeed, the largest particles may bridge the smallest gap between substrates. When the particles of the largest diameter distribution are in contact with each other, a gap or void volume between the particles will remain. The mean diameter of the middle diameter distribution may be advantageously selected to just fit within the gap or void between the larger particles. The insertion of the middle diameter distribution will create a population of smaller gaps or voids between the particles of the largest diameter distribution and the particles of the middle diameter distribution the dimensions of which may be used to select the mean diameter of the smallest distribution. In a similar fashion, desirable mean particle dimensions may be selected for fourth, fifth, or higher order populations of particles if desired.

Each distribution of thermally conductive particles may comprise the same or different type of thermally conductive particles in each or any of the at least three distributions. Additionally, each distribution of thermally conductive particles may contain a mixture of different types of thermally conductive particles.

From the foregoing discussion, it will be seen that the mean diameters of the successive particle size distributions preferably will be quite distinct and well separated to ensure that they will fit within the interstices left by the previously packed particles without significantly disturbing the packing of the previously packed particles.

The thermally conductive particles are usually present in an amount in a range of 50 to 98 weight percent based on the total weight of the core. The amount can be at least 50 weight percent, at least 55 weight percent, at least 60 weight percent, at least 65 weight percent, at least 70 weight percent, at least 75 weight percent, at least 80 weight percent, at least 85 weight percent, or at least 90 weight percent and can be up to 98 weight percent, up to 97 weight percent, up to 96 weight percent, up to 95 weight percent, up to 94 weight percent, up to 93 weight percent, up to 92 weight percent, up to 91 weight percent, up to 90 weight percent, up to 85 weight percent, up to 80 weight percent, up to 75 weight percent, or up to 70 weight percent. To obtain the maximum conductivity of the pressure-sensitive adhesive deposited on a substrate, the amount is often greater than or equal to 80 weight percent, greater than 85 weight percent, greater than 90 weight percent and up to 98 weight percent based on the total weight of the core.

Sheath

The sheath provides structural integrity to the core-sheath filament as well as protecting the adhesive core so that it does not adhere to itself (such as when the filament is provided in the form of a spool or roll) or so that is does not prematurely adhere to another surface. The sheath is typically selected to be thick enough to support the filament form factor and to allow for delivery of the core-sheath filament to a deposition location. On the other hand, the thickness of the sheath is selected so that its presence does not adversely affect the overall adhesive performance of the core-sheath filament.

The sheath material is typically selected to have a melt flow index (MFI) that is less than or equal to 15 grams/10 minutes when measured in accord with ASTM D1238-13 at 190 °C and with a load of 2.16 kilograms. Such a low melt flow index is indicative of a sheath material that has sufficient strength (robustness) to allow the core-sheath filament to withstand the physical manipulation required for handling such as for use with an additive manufacturing apparatus.

During such processes, the core-sheath filament often needs to be unwound from a spool, introduced into the additive manufacturing apparatus, and then advanced into a nozzle for melting and blending without breaking. Compared to sheath materials with a higher melt flow index, the sheath materials with a melt flow index that is less than or equal to 15 grams/10 minutes are less prone to breakage (tensile stress fracture) and can be wound into a spool or roll having a relatively small radius of curvature. In certain embodiments, the sheath material exhibits a melt flow index of 14 grams/10 minutes or less, 13 grams/10 minutes or less, 11 grams/10 minutes or less, 10 grams/10 minutes or less, 8 grams/10 minutes or less, 7 grams/10 minutes or less, 6 grams/10 minutes or less, 5 grams/10 minutes or less, 4 grams/10 minutes or less, 3 grams/10 minutes or less, 2 grams/10 minutes or less, or 1 grams/10 minutes or less. If desired, various sheath materials can be blended (e.g., melted and mixed) together to provide a sheath composition having the desired melt flow index.

Low melt flow index values tend to correlate with high melt viscosities and high molecular weight. Higher molecular weight sheath materials tend to result in better mechanical performance. That is, these sheath materials tend to be more robust (i.e., the sheath materials are tougher and less likely to undergo tensile stress fracture). This increased robustness is often the result of increased levels of polymer chain entanglements. The higher molecular weight sheath materials are often advantageous for additional reasons. For example, these sheath materials tend to migrate less to adhesive/substrate interface in the final article; such migration can adversely affect the adhesive performance, especially under aging conditions. In some cases, however, block copolymers with relatively low molecular weights can behave like high molecular weight materials due to physical crosslinks. That is, the block copolymers can have low MFI values and good toughness despite their relatively low molecular weights.

The sheath materials are usually semi-crystalline polymers that can provide robust mechanical properties even at relatively low molecular weight such as 100,000 Daltons. That is, sheath materials with a weight average molecular weight of at least 100,000 Daltons can often provide the toughness and elongation needed to form a stable filament spool. In many embodiments, the weight average molecular weight is at least 150,000 Daltons, at least 200,000 Daltons, at least 250,000 Daltons, at least 300,000 Daltons, at least 400,000 Daltons, or even at least 500,000 Daltons. The molecular weight can go up to, for example, 2,000,000 Daltons or even higher or up to 1,000,000 Daltons. Higher molecular weight materials often advantageously have lower melt flow index values.

As the melt flow index is lowered (such as to less than or equal to 15 grams/10 minutes), less sheath material is required to obtain the desired mechanical strength. That is, the thickness of the sheath layer can be decreased and its contribution to the overall longest cross-sectional distance (e.g., diameter) of the core-sheath filament can be reduced. This is advantageous because the sheath material may adversely impact the adhesive properties of the core pressure-sensitive adhesive if it is present in an amount greater than about 10 weight percent of the total weight of the filament.

For application to a substrate, the core-sheath filament is typically melted and mixed together before deposition on the substrate. The sheath material desirably is blended with the pressure-sensitive adhesive in the core without adversely impacting the performance of the pressure-sensitive adhesive. To blend the two compositions effectively, it is often desirable that the sheath composition is compatible with the core composition. The use of sheath materials that include polar groups such as oxy groups, carbonyl groups, amino groups, amido groups, or combinations thereof may be advantageous.

If the core-sheath filament is formed by co-extrusion of the core composition and the sheath composition, the melt viscosity of the sheath composition is desirably selected to be somewhat like that of the core composition. If the melt viscosities are not sufficiently similar (such as if the melt viscosity of the core composition is significantly lower than that of the sheath composition), the sheath may not surround the core in the filament. The filament can then have exposed core regions and the filament may adhere to itself. Additionally, if the melt viscosity of the sheath core composition is significantly higher than the core composition, during melt blending of the core composition and the sheath composition before dispensing, the non-tacky sheath may remain exposed (not blended sufficiently with the core) and adversely impact formation of an adhesive bond with the substrate. The melt viscosities of the sheath composition to the melt viscosity of the core composition is often in a range of 100: 1 to 1:100, in a range of 50:1 to 1:50, in a range of 20: 1 to 1:20, in a range of 10:1 to 1:10, or in a range of 5:1 to 1:5. In many embodiments, the melt viscosity of the sheath composition is greater than that of the core composition. In such situations, the viscosity of the sheath composition to the core composition is typically in a range of 100: 1 to 1:1, in a range of 50:1 to 1:1, in a range of 20:1 to 1:1, in a range of 10: 1 to 1:1, or in a range of 5:1 to 1:1.

In addition to exhibiting strength, the sheath material is non-tacky. A material is non-tacky if it passes a "Self-Adhesion Test", in which the force required to peel the material apart from itself is at or less than a predetermined maximum threshold amount, without fracturing the material. The Self-Adhesion Test is described in the Examples below. Employing a non-tacky sheath allows the filament to be handled and optionally printed, without undesirably adhering to anything prior to deposition onto a substrate.

In certain embodiments, the neat sheath material exhibits a combination of at least two of low MFI (e.g., less than or equal to 15 grams/10 minutes), moderate elongation at break (e.g., 100% or more as determined by ASTM D638-14 using test specimen Type IV), low tensile stress at break (e.g., 10 MPa or more as determined by ASTM D638-14 using test specimen Type IV), and moderate Shore D hardness (e.g., 30-70 as determined by ASTM D2240-15). A sheath having at least two of these properties tends to have the toughness suitable for use in FFF-type applications.

In some embodiments, to achieve the goals of providing structural integrity and a non-tacky surface, the sheath comprises a material selected from styrenic copolymers (e.g., styrenic block copolymers such as styrene-butadiene block copolymers), polyolefins (e.g., polyethylene, polypropylene, and copolymers thereof), polyurethanes, ethylene vinyl acetate copolymers, polyamides, ethylene (meth)acrylate copolymers (ethylene (meth)acrylic copolymers), anhydride modified ethylene acrylate copolymers, (meth)acrylic block copolymers, poly(lactic acid), and the like. Depending on the method of making the core-sheath filament, it may be advantageous to at least somewhat match the polarity of the sheath polymeric material with that of the (meth)acrylate-based polymeric material in the core.

Suitable styrenic materials for use in the sheath are commercially available and include, for example and without limitation, styrenic materials under the trade designation KRATON (e.g., KRATON D116 P, D1118, D1119, and A 1535) from Kraton Performance Polymers (Houston, TX, USA), under the trade designation SOLPRENE (e.g., SOLPRENE S-1205) from Dynasol (Houston, TX, USA), under the trade designation QUINTAC from Zeon Chemicals (Louisville, KY, USA), under the trade designations VECTOR and TAIPOL from TSRC Corporation (New Orleans, LA, USA), and under the trade designations K-RESIN (e.g., K-RESIN DK11) from Ineos Styrolution (Aurora, IL, USA).

Suitable polyolefins are not particularly limited and include, for example, polypropylene (e.g., a polypropylene homopolymer, a polypropylene copolymer, and/or blends comprising polypropylene) or polyethylene (e.g., a polyethylene homopolymer, a polyethylene copolymer, high density polyethylene ("HDPE"), medium density polyethylene ("MDPE"), low density polyethylene ("LDPE"), and combinations thereof). For instance, suitable commercially available LDPE resins include, but are not limited to, PETROTHENE NA217000 available from LyondellBasell (Rotterdam, Netherlands) with a MFI of 5.6 grams/10 minutes and a tensile elongation at break of 550 percent and MARLEX 1122 available from Chevron Phillips (The Woodlands, TX, USA). Suitable HDPE resins include ELITE 5960G from Dow Chemical Company (Midland, MI, USA) and HDPE HD 6706 series from ExxonMobil (Houston, TX, USA). Polyolefin block copolymers are available from Dow Chemical under the trade designation INFUSE (e.g., INFUSE 9807).

Suitable commercially available thermoplastic polyurethanes include, for instance, ESTANE 58213 and ESTANE ALR 87A available from the Lubrizol Corporation (Wickliffe, OH, USA).

Suitable ethylene vinyl acetate ("EVA") copolymers (i.e., copolymers of ethylene with vinyl acetate) for use in the sheath include resins from Dow Inc. (Midland, MI, USA) available under the trade designation ELVAX such as ELVAX 3135 SB with a MFI of 0.4 grams/10 minute. Typical grades range in vinyl acetate content from 9 to 40 weight percent and a melt flow index of as low as 0.03 grams/10 minutes (per ASTM D1238). Suitable EVAs also include high vinyl acetate ethylene copolymers from LyondellBasell (Houston, TX) available under the trade designation ULTRATHENE. Typical grades range in vinyl acetate content from 12 to 18 weight percent. Suitable EVAs also include EVA copolymers from Celanese Corporation (Dallas, TX, USA) available under the trade designation ATEVA. Typical grades range in vinyl acetate content from 2 to 26 weight percent.

Suitable polyamide materials for use in the sheath include nylon (e.g., nylon 6,6), a nylon terpolymeric material from Nylon Corporation of America (Manchester, NH, USA) under the trade designation NYCOA (e.g., NYCOA XN-287-CAY with a MFI of 5.1 grams/10 minutes), and a polyamide-polyether block copolymer such as that commercially available under the trade designation PEBAX (e.g., PEBAX MV 1074SA) from Arkema Inc. (King of Prussia, PA, USA).

Suitable ethylene (meth)acrylate copolymers for use in the sheath include resins from Dow Inc. (Midland, MI, USA) under the trade designation ELVALOY (e.g., ELVALOY 1330 with 30 percent methyl acrylate and a MFI of 3.0 grams/10 minutes, ELVALOY 1224 with 24 percent methyl acrylate and a MFI of 2.0 grams/10 minutes, and ELVALOY 1609 with 9 percent methyl acrylate and a MFI of 6.0 grams/10 minutes). Suitable ethylene (meth)acrylic copolymers for use in the sheath include resins from Dow, Inc. under the trade designation NUCREL (e.g., NUCREL 925 with a MFI of 25.0 grams/10 minutes and NUCREL 3990 with a MFI of 10.0 grams/10 minutes). The NUCREL 925 can be used if it is blended with another polymeric material such that the blend has lower MFI such as no greater than 15 grams/10 minutes.

Suitable anhydride modified ethylene acrylate resins are available from Dow under the trade designation BYNEL such as BYNEL 21E533 with a MFI of 7.3 grams/10 minutes and BYNEL 30E753 with a MFI of 2.1 grams/10 minutes.

Suitable (meth)acrylic block copolymers for use in the sheath include block copolymers from Kuraray (Chiyoda-ku, Tokyo, JP) under the trade designation KURARITY (e.g., KURARITY LA2250 and KURARITY LA4285). KURARITY LA2250, which has a MFI of 22.7 grams/10 minutes and tensile elongation of 380 percent, is an ABA block copolymer with poly(methyl methacrylate) as the A blocks and poly(n-butyl acrylate) as the B block. About 30 weight percent of this polymer is poly(methyl methacrylate). The KURARITY LA2250 can be used in the sheath provided it is blended with another sheath material having a lower MFI such as, for example, KURARITY LA4285 so that the blend has a MFI that is no greater than 15 grams/10 minutes. KURARITY LA4285, which has a MFI of 1.8 grams/10 minutes an tensile elongation of 140 percent, is an ABA block copolymer with poly(methyl methacrylate) as the A blocks and poly(n-butyl acrylate as the B block. About 50 weight percent of this polymer is poly(methyl methacrylate). Varying the amount of poly(methyl methacrylate) in the block copolymer alters its glass transition temperature and its toughness.

Suitable poly(lactic acid) for use in the sheath include those available from Natureworks, LLC (Minnetonka, NM, USA) under the trade designation INGEO (e.g., INGEO 4043D General Purpose Fiber grade).

In addition to the thermoplastic material, the sheath composition can optionally include thermally conductive particles. The same type of thermally conductive particles described above for use in the core can be used in the sheath. The amount of the optional thermally conductive particles in the sheath is often in a range of 0 to 80 weight percent based on a total weight of the sheath composition. The amount can be at least 1 weight percent, at least 2 weight percent, at least 5 weight percent, at least 10 weight percent, at least 20 weight percent, or at least 30 weight percent and up to 80 weight percent, up to 70 weight percent, up to 60 weight percent, up to 50 weight percent, or up to 40 weight percent.

The sheath typically makes up 0.1 to 10 weight percent of the total weight of the core-sheath filament. The amount of the sheath is selected to provide a sufficiently robust core-sheath filament that can be easily handled without rupturing or tearing of the sheath on the filament. The amount of the sheath material used in the core-sheath filament is often selected to be as low as possible because the sheath composition typically does not enhance (and can often diminish) the adhesive performance and thermal thermal conductivity of the pressure-sensitive adhesive composition within the core. The amount of the sheath in the core-sheath filament can be at least 0.1 weight percent, at least 0.2 weight percent, at least 0.5 weight percent, at least 1 weight percent, at least 2 weight percent, at least 3 weight percent, at last 4 weight percent, at least 5 weight percent and up to 10 weight percent, up to 9 weight percent, up to 8 weight percent, up to 7 weight percent, up to 6 weight percent, or up to 5 weight percent based on the total weight of the core-sheath filament.

Method of printing

In a third aspect, a method of printing a pressure-sensitive adhesive is provided. The method includes forming (or providing) a core-sheath filament as described above. The method further includes melting and mixing the core-sheath filament to form a molten composition. The method still further includes dispensing the molten composition through a nozzle onto a substrate. The molten composition can be formed before reaching the nozzle, can be formed by mixing in the nozzle, or can be formed during dispensing through the nozzle, or a combination thereof. Preferably, the sheath composition is uniformly blended throughout the core composition and the molten composition is uniform.

Fused Filament Fabrication, which is also known under the trade designation "FUSED DEPOSITION MODELING" from Stratasys, Inc., Eden Prairie, Minn., is a process that uses a thermoplastic strand fed through a hot can to produce a molten aliquot of material from an extrusion head. The extrusion head extrudes a bead of material in 3D space as called for by a plan or drawing (e.g., a computer aided drawing (CAD file)). The extrusion head typically lays down material in layers, and after the material is deposited, it fuses.

One suitable method for printing a core-sheath filament comprising a pressure-sensitive adhesive onto a substrate is a continuous non-pumped filament fed dispensing unit. In such a method, the dispensing throughput is regulated by a linear feed rate of the core-sheath filament allowed into the dispense head. In most currently commercially available FFF dispensing heads, an unheated filament is mechanically pushed into a heated zone, which provides sufficient force to push the filament out of a nozzle. A variation of this approach is to incorporate a conveying screw in the heated zone, which acts to pull in a filament from a spool and to create pressure to dispense the material through a nozzle. Although addition of the conveying screw into the dispense head adds cost and complexity, it does allow for increased throughput, as well as the opportunity for a desired level of component mixing and/or blending. A characteristic of filament fed dispensing is that it is a true continuous method, with only a short segment of filament in the dispense head at any given point.

There can be several benefits to filament fed dispensing methods compared to traditional hot melt adhesive deposition methods. First, filament fed dispensing methods typically permit quicker changeover to different adhesives. Also, these methods do not use a semi-batch mode with melting tanks and this minimizes the opportunity for thermal degradation of an adhesive and associated defects in the deposited adhesive. Filament fed dispensing methods can use materials with higher melt viscosity, which affords an adhesive bead that can be deposited with greater geometric precision and stability without requiring a separate curing or crosslinking step. In addition, higher molecular weight raw materials can be used within the adhesive because of the higher allowable melt viscosity. This is advantageous because uncured hot melt pressure-sensitive adhesives containing higher molecular weight raw materials can have significantly improved high temperature holding power while maintaining stress dissipation capabilities. Still further, the filament fed dispensing methods do not have the associated settling problems often encountered when highly filled adhesive compositions are deposited using traditional dispensing methods.

The form factor for FFF filaments is usually a concern. For instance, consistent cross-sectional shape and longest cross-sectional distance (e.g., diameter) assist in cross-compatibility of the core-sheath filaments with existing standardized FFF filaments such as ABS or polylactic acid (PLA). In addition, a consistent longest cross-sectional distance (e.g., diameter) helps ensure the proper throughput of adhesive because the FFF dispense rate is generally determined by the feed rate of the linear length of a filament. Suitable cross-sectional variance of the core-sheath filament according to at least certain embodiments when used in FFF includes a maximum variation of diameter of 20 percent over a length of 50 cm, or even a maximum variation in diameter of 15 percent over a length of 50 cm.

Extrusion-based layered deposition systems (e.g., fused filament fabrication systems) are useful for making articles including printed pressure-sensitive adhesives in methods of the present disclosure. Deposition systems having various extrusion types of are commercially available, including single screw extruders, twin screw extruders, hot-end extruders (e.g., for filament feed systems), and direct drive hot-end extruders (e.g., for viscoelastic filament feed systems). The deposition systems can also have different motion types for the deposition of a material, including using XYZ stages, gantry cranes, and robot arms. Common manufacturers of additive manufacturing deposition systems include Stratasys, Ultimaker, MakerBot, Airwolf, WASP, MarkForged, Prusa, Lulzbot, BigRep, Cosin Additive, and Cincinnati Incorporated. Suitable commercially available deposition systems include for instance and without limitation, BAAM, with a pellet fed screw extruder and a gantry style motion type, available from Cincinnati Incorporated (Harrison, OH); BETABRAM Model P1, with a pressurized paste extruder and a gantry style motion type, available from Interelab d.o.o. (Senovo, Slovenia); AM1, with either a pellet fed screw extruder or a gear driven filament extruder as well as a XYZ stages motion type, available from Cosine Additive Inc. (Houston, TX); KUKA robots, with robot arm motion type, available from KUKA (Sterling Heights, MI); and AXIOM, with a gear driven filament extruder and XYZ stages motion type, available from AirWolf 3D (Fountain Valley, CA).

Three-dimensional articles including a printed adhesive can be made, for example, from computer-aided design (CAD) models in a layer-by-layer manner by extruding a molten adhesive onto a substrate. Movement of the extrusion head with respect to the substrate onto which the adhesive is extruded is performed under computer control, in accordance with build data that represents the final article. The build data is obtained by initially slicing the CAD model of a three-dimensional article into multiple horizontally sliced layers. Then, for each sliced layer, the host computer generates a build path for depositing roads of the composition to form the three-dimensional article having a printed adhesive thereon. In select embodiments, the printed adhesive comprises at least one groove formed on a surface of the printed adhesive. Optionally, the printed adhesive forms a discontinuous pattern on the substrate.

Although three-dimensional articles including a printed pressure-sensitive adhesive can be made by employing a layer-by-layer placement of successive patterns of adhesive according to a CAD file, other embodiments do not require the fidelity and dimensionality of such a method. That is, in some embodiments, the printed thermally conductive pressure-sensitive adhesive need not hold, or even nearly hold, the cross-sectional shape of the nozzle of the printing head immediately after printing or dispensing. Indeed, in some embodiments, it is advantageous for the printed thermally conductive adhesive material to controllably slump or flow or spread on the substrate after printing such that the final adhesive is a single layer after slumping and no longer maintains a 3-dimensional structure. In some embodiments, the method of printing the pressure-sensitive adhesive includes dispensing the molten composition through a nozzle having a first diameter onto a substrate, wherein the molten composition slumps to a thickness less than 90 percent of the first diameter of the nozzle. The thickness can be, for example, less than 80 percent, less than 70 percent, less than 60 percent, less than 50 percent, less than 40 percent, less than 30 percent, less than 20 percent, less than 10 percent and at least 1 percent, at least 5 percent, at least 10 percent, at least 20 percent, at least 40 percent, or at least 50 percent of the first diameter of the nozzle.

Thus, a method of printing a thermally conductive pressure-sensitive adhesive is provided. The method includes forming or providing a core-sheath filament comprising a) a core containing 2 to 50 weight percent of a (meth)acrylate-based polymeric material and 50 to 98 weight percent of thermally conductive particles based on a total weight of the core and b) a sheath surrounding the core, the sheath comprising a non-tacky thermoplastic material. The method further includes melting and mixing the core-sheath filament to form a molten composition. The method still further includes dispensing the molten composition through a nozzle having a first diameter onto a substrate, wherein the deposited molten composition spreads to a thickness on the substrate that is less than the first diameter. For example, the thickness can be less than 90 percent of the first diameter.

The substrate onto which the molten adhesive is deposited is not particularly limited. In many embodiments, the substrate comprises a polymeric part, a glass part, or a metal part. Use of additive manufacturing to print an adhesive on a substrate may be especially advantageous when the substrate has a non-planar surface, for instance a substrate having an irregular or complex surface topography.

The core-sheath filament can be extruded through a nozzle carried by an extrusion head and deposited as a sequence of roads on a substrate in an x-y plane. The extruded molten adhesive fuses to previously deposited molten adhesive as it solidifies upon a drop-in temperature. This can provide at least a portion of the printed adhesive. The position of the extrusion head relative to the substrate is then incremented along a z-axis (perpendicular to the x-y plane), and the process is repeated to form at least a second layer of the molten adhesive on at least a portion of the first layer. Changing the position of the extrusion head relative to the deposited layers may be carried out, for example, by lowering the substrate onto which the layers are deposited. The process can be repeated as many times as necessary to form a three-dimensional article including a printed adhesive resembling the CAD model. Further details can be found, for example, Turner, B.N. et al., "A review of melt extrusion additive manufacturing processes: I. process design and modeling"; Rapid Prototyping Journal 20/3 (2014) 192-204. In certain embodiments, the printed adhesive comprises an integral shape that varies in thickness in an axis normal to the substrate. This is particularly advantageous in instances where a shape of adhesive is desired that cannot be formed using die cutting of an adhesive.

A variety of fused filament fabrication 3D printers may be useful for carrying out the method according to the present disclosure. Many of these are commercially available under the trade designation "FDM" from Stratasys, Inc., Eden Prairie, MN, USA and subsidiaries thereof. Desktop 3D printers for idea and design development and larger printers for direct digital manufacturing can be obtained from Stratasys and its subsidiaries, for example, under the trade designations "MAKERBOT REPLICATOR", "UPRINT", "MOJO", "DIMENSION", and "FORTUS". Other 3D printers for fused filament fabrication are commercially available from, for example, 3D Systems, Rock Hill, SC, USA and Airwolf 3D, Costa Mesa, CA, USA.

In certain embodiments, the method further comprises mixing the molten composition (e.g., mechanically) prior to dispensing the molten composition. In other embodiments, the process of being melted in and dispensed through the nozzle may provide sufficient mixing of the composition such that the molten composition is mixed in the nozzle, during dispensing through the nozzle, or both.

The temperature of the substrate onto which the adhesive can be deposited may also be adjusted to promote the fusing of the deposited adhesive. In the method according to the present disclosure, the temperature of the substrate may be, for example, at least about 100°C, 110°C, 120°C, 130°C, or 140°C up to 175°C or 150°C.

The printed adhesive prepared by the method according to the present disclosure may be an article useful in a variety of industries, for example, the aerospace, apparel, architecture, automotive, business machines products, consumer, defense, dental, electronics, educational institutions, heavy equipment, jewelry, medical, and toys industries. The composition of the sheath and the core can be selected so that, if desired, the printed adhesive is clear.

In some embodiments, the printed (i.e., deposited) pressure-sensitive adhesive can be used in gap filler applications such as in battery assemblies for electric vehicles. For example, the pressure-sensitive adhesive can connect a metal base plate to a plurality of battery cells. That is, the molten composition formed from the core-sheath filament is applied as a pressure-sensitive adhesive layer to a metal base plate such as one made of aluminum or steel. A plurality of battery cells can be positioned on a surface of the pressure-sensitive adhesive opposite the metal base plate to form a battery module. The number, dimensions, and positions of the battery cells can be adjusted to meet specific design and performance requirement of the battery module. Further, multiple battery modules can be connected by adhering them to a second base plate using printed pressure-sensitive adhesive according to the present disclosure.

In some embodiments, the printed (i.e., deposited) pressure-sensitive adhesive can be used in thermal interface material (TIM) applications for dissipating heat in electronic or electrical devices. The heat may come from any component in the device including power supplies, integrated circuits, motors, and the like.

In a first example, the pressure-sensitive adhesive thermally can connect a semiconductor integrated circuit (IC, also known as a chip) to a heat spreader or cover. That is, the molten composition formed from the core-sheath filament is applied as a pressure-sensitive adhesive layer to an IC, followed by placement of a heat spreader or cover to the pressure-sensitive adhesive layer. The pressure-sensitive adhesive layer provides a thermal path between the IC and the heat spreader. Alternatively, the molten composition formed from the core-sheath filament is applied as a pressure-sensitive adhesive layer to a heat spreader or cover, followed by placement of the IC to the pressure-sensitive adhesive layer. The pressure-sensitive adhesive layer provides a thermal path between the IC and the heat spreader or cover.

In a second example, the pressure-sensitive adhesive thermally connects an IC to a cooling device, for example a fluid-filled cooling jacket or plate or a vapor-compression cycle refrigeration device. That is, the molten composition formed from the core-sheath filament is applied as a pressure-sensitive adhesive layer to a first substrate, and then the first substrate is attached to a second substrate via the pressure-sensitive adhesive layer, yielding an assembly where an IC is in thermal communication with the cooling device through the pressure-sensitive adhesive layer. In this second example, the first substrate may be the IC and the second substrate may be the cooling device. Alternatively, the first substrate may be the cooling device and the second substrate may be the IC. In either of the immediately foregoing two embodiments, the substrate which is an IC or the substrate which is a cooling device may already include multiple layers or components including its own pre-existing (before bonding with the pressure-sensitive adhesive) thermal interface material layers.

Various embodiments are provided that relate to a core-sheath filament, a method of making the core-sheath filament, or a method of printing a pressure-sensitive adhesive using the filament.

Embodiment 1A is a core-sheath filament that includes a) 90 to 99.9 weight percent a core that is a thermally conductive pressure-sensitive adhesive and b) 0.1 to 10 weight percent of a sheath surrounding the core that contains a non-tacky thermoplastic material, wherein each amount is based on a total weight of the core-sheath filament. The core contains 2 to 50 weight percent of a (meth)acrylate-based polymeric material and 50 to 98 weight percent of thermally conductive particles based on a total weight of the core. The core-sheath filament has a longest cross-sectional distance in a range of 1 to 20 millimeters.

Embodiment 2A is the core-sheath filament of embodiment 1A, wherein the sheath exhibits a melt-flow index of less than 15 grams per 10 minutes.

Embodiment 3A is the core-sheath filament of embodiment 1A or 2A, wherein the pressure-sensitive adhesive comprises 2 to 20 weight percent of the (meth)acrylate-based polymeric material and 80 to 98 weight percent of the thermally conductive particles based on a total weight of the core.

Embodiment 4A is the core-sheath filament of any one of embodiments 1A to 3A, wherein the thermally conductive particles have a multi-modal size distribution.

Embodiment 5A is the core-sheath filament of any one of embodiments 1A to 4A, wherein the thermally conductive particles have a tri-modal size distribution and the pressure-sensitive adhesive contains 2 to 15 weight percent of the (meth)acrylate-based polymeric material and 85 to 98 weight percent thermally conductive particles based on the total weight of the core.

Embodiment 6A is the core-sheath filament of any one of embodiments 1A to 5A, wherein the core comprises a first (meth)acrylate-based polymeric material having acidic groups and a second (meth)acrylate-based polymeric material having basic groups.

Embodiment 1B is a method of making a core-sheath filament. The method includes forming (or providing) a core composition that is a thermally conductive pressure-sensitive adhesive. The core composition includes 1) 2 to 50 weight percent of a (meth)acrylate-based polymeric material and 2) 50 to 98 weight percent of thermally conductive particles based on a total weight of the core. The method further includes providing a sheath composition comprising a non-tacky thermoplastic material. The method still further includes wrapping the sheath composition around the core composition to form the core-sheath filament, wherein the core-sheath filament contains 90 to 99.9 weight percent of the core and 0.1 to 10 weight percent of the sheath based on a total weight of the core-sheath filament and wherein the core-sheath filament has a longest cross-sectional distance in a range of 1 to 20 millimeters.

Embodiment 2B is the method of Embodiment 1B, wherein the wrapping the sheath composition around the core composition comprises co-extruding the core composition and the sheath composition such that the sheath composition surrounds the core composition.

Embodiment 1C is a method of printing a pressure-sensitive adhesive. The method includes forming or providing a core-sheath filament as described in Embodiment 1B, melting and mixing the core-sheath filament to form a molten composition, and dispensing the molten composition onto a substrate.

Embodiment 2C is the method of embodiment 1C, wherein, dispensing is through a nozzle having a first diameter and wherein the molten composition spreads to a thickness on the substrate that is less than the first diameter.

## Examples

Unless otherwise noted, all parts, percentages, ratios, etc. in the Examples and the rest of the specification are by weight. Unless otherwise indicated, all other reagents were obtained, or are available from fine chemical vendors such as Sigma-Aldrich Company, St. Louis, Missouri, or may be synthesized by known methods. The following abbreviations are used in this section: min = minutes, s = second, g = gram, mg = milligram, kg = kilogram, m = meter, centimeter = cm, mm = millimeter, $\mu$m = micrometer or micron, °C = degrees Celsius, °F = degrees Fahrenheit, N = Newton, oz = ounce, Pa=Pascal, MPa = mega Pascal, rpm = revolutions per minute, mW/cm$^2$ = milliWatts per square centimeter, K-m^2/W = Kelvin-meter-square meter per Watts, phr = parts per hundred, W/mK = Watts per meter Kelvin, psi = pressure per square inch, mJ/cm$^2$ = milliJoules per square centimeter

Table 1 (below) lists materials used in the examples and their sources.

TABLE 1. Materials List

| DESIGNATION | DESCRIPTION |
| --- | --- |
| IOA | Isooctyl acrylate, obtained from Sigma Aldrich, St. Louis, MO, USA |
| IBOA | Isobornyl acrylate, obtained from Sigma Aldrich, St. Louis, MO, USA |
| AA | Acrylic acid, obtained from Sigma Aldrich, St. Louis, MO, USA |
| Partially polymerized 2-ethylhexylacrylate | Prepared using a method like that described for Precursor XIII in US 2013/0004694 (Hitschmann et al.) except that the polymerization was quenched at a viscosity of 3,500 mPAs and no subsequent additions were made. That is, after partial polymerization, there was no addition of either 1,6-diacrylate or OMNIRAD BDK. |
| IRGANOX 1010 | Pentaerythritoltetrakis(3-(3,5-di-tert-butyl-4-hydroxyphenyl)propionate), obtained under the trade designation "IRGANOX 1010" from BASF Corporation, Florham Park, NJ, USA |

(continued)

| DESIGNATION | DESCRIPTION |
|---|---|
| IOTG | Isooctyl thioglycolate, obtained from TCI America, Portland, OR |
| VAZO 52 | 2-2'-Azobis(2,4-dimethylvaleronitrile), obtained under the trade designation "VAZO 52" from Chemours, Wilmington, DE |
| VAZO 88 | (1,1'-Azobis(cyanocyclohexane)), obtained under the trade designation "VAZO 88" from Chemours, Wilmington, DE |
| LUPERSOL 101 | 2,5-bis(tert-butylperoxy)-2,5-dimethylhexane, obtained under the trade designation "LUPERSOL 101" from Atofina Chemical, Inc., Philadelphia, PA |
| LUPERSOL 130 | 2,5-Dimethyl-2,5-di-t-butylperoxyhexyne-3, obtained under the trade designation "LUPERSOL 130" from Atofina Chemical, Inc., Philadelphia, PA |
| MT PE1 | Pentaerythritol tetrakis (3-mercaptobutylate), obtained under the trade designation "KARENZ MT PEI" form Showa Denko America, Inc., New York, NY |
| BYK-145 | A phosphoric acid ester salt of a high molecular copolymer with pigment affinic groups used as a high molecular weight wetting and dispersing additive for solvent-borne systems, obtained under the trade designation "DISPERBYK-145" from BYK-Chemie GmbH, Wesel, Germany |
| 2-EHA | 2-ethylhexyl acrylate, obtained from Sigma Aldrich, St. Louis, MO |
| 2EHA/DMAEMA (40/60) copolymer | Copolymer prepared as described in U.S. Patent No. 5,986,011 (Ellis et al.) with a Mw of about 18,500 Daltons |
| IRGACURE 651 | 2,2-dimethoxy-1,2-diphenylethan-1-one, obtained under the trade designation "IRGACURE 651" from BASF Corporation, Florham Park, NJ |
| IRGACURE 819 | Phenylbis(2,4,6-trimethlybenzoyl) phosphine oxide, obtained under the trade designation "IRGACURE 819" from BASF Corporation, Florham Park, NJ |
| IRGANOX 1076 | Octadecyl-[3-(3,5-di-tert-butyl-4-hydroxyphenyl)propionate], obtained under the trade designation "IRGANOX 1076" from BASF Corporation, Florham Park, NJ |
| BAK90 | Spherical alumina with a $D_{50}$ of 82.13 microns, obtained under the trade designation "BAK90" from Bestry Performance Materials Co., Ltd., Shanghai, China |
| BAK70 | Spherical alumina with a $D_{50}$ of 70.30 microns, obtained under the trade designation "BAK70" from Bestry Performance Materials Co., Ltd., Shanghai, China |
| BAK15 | Spherical alumina with a $D_{50}$ of 14.09 microns, obtained under the trade designation "BAK15" from Bestry Performance Materials Co., Ltd., Shanghai, China |
| BAK 10 | Spherical alumina with a $D_{50}$ of 11.30 microns, obtained under the trade designation "BAK2" from Bestry Performance Materials Co., Ltd., Shanghai, China |
| BAK2 | Spherical alumina with a $D_{50}$ of 2.25 microns, obtained under the trade designation "BAK2" from Bestry Performance Materials Co., Ltd., Shanghai, China |
| TM1250 | Alumina-based filler with a $D_{50}$ of 1.60 microns, obtained under the trade designation "MARTOXID TM1250" from Huber Engineered Materials, Atlanta, GA |
| Boron Nitride | Boron nitride filler with a $D_{50}$ of 8.00-14.00 microns, obtained under the trade designation "3M COOLING FILLER, GRADE CFP 012" from 3M Germany GmbH, Kempten, Germany |
| ATH | Aluminum hydroxide with a $D_{50}$ of 55.0 microns, obtained under the trade designation "ALUMINUM HYDROXIDE GRADE B53" from Nippon Light Metal Company, Ltd., Kanbara, Shimizu Ward, Shizuoka, Japan |

(continued)

| DESIGNATION | DESCRIPTION |
|---|---|
| BF013 | Aluminum hydroxide with $D_{50}$ of 1 micron, obtained under the trade designation "ALUMINUM HYDROXIDE GRADE BF013" from Nippon Light Metal, Ltd., Kanbara, Shimizu Ward, Shizuoka, Japan |
| BF083 | Aluminum hydroxide with $D_{50}$ of 8 microns, obtained under the trade designation "ALUMINUM HYDROXIDE GRADE BF083" from Nippon Light Metal, Ltd., Kanbara, Shimizu Ward, Shizuoka, Japan |
| LDPE | Low density polyethylene, obtained under the trade designation "PETROTHENE NA217000" from LyondellBasell, Houston, TX |
| KS021P | Ethylene-Propylene copolymer whose MFR is 0.9 g/10min at 230 °C, and density is 880 kg/m$^3$, obtained under the trade designation "ADFLEX KS021P" from LyondellBasell Industries, Houston, TX |
| PEBAX | A thermoplastic elastomer made of hydrophilic flexible polyether and rigid polyamide, obtained under the trade designation "PEBAX MV 1074 SA" from Arkema Inc., King of Prussia, PA |
| MIB(E) | Both side silicone treated polyester liner, whose thickness is 0.050 mm, obtained under trade designation "CERAPEEL" from Toray Advanced Film Co., Ltd., Tokyo, Japan |
| A50 | One side silicone treated polyester liner, whose thickness is 0.050 mm, obtained under the trade designation "PUREX" from Teijin Film Solutions Limited, Tokyo, Japan |
| LA2250 | PMMA-b-PnBA-b-PMMA A-B-A type block co-polymer. (approximately 30 wt% PMMA), obtained under the trade designation "KURARITY LA2250" from Kuraray Chiyoda-ku, Tokyo, Japan |
| LA4285 | PMMA-b-PnBA-b-PMMA A-B-A type block co-polymer. (about 50 wt% PMMA), obtained under the trade designation "KURARITY LA4285" from Kuraray Chiyoda-ku, Tokyo, Japan |

TEST METHODS

$D_{50}$ *Measurements Test Method*

The particle size of the filler was measured using a laser diffraction analyzer (Model S3500, Microtrac Inc., Montgomeryville, PA, USA). Each filler material was tested individually using the following procedure. A mixture of 2% sodium metahexaphosphate (SHMP) and 98% deionized water (DI-water) was used to prepare a solution of the filler materials. Approx. 0.15 g of the filler was mixed with 1 gram of the DI-water and SHMP solution. Using a pipette, a few droplets of the mixture was deposited in the reservoir of the S3500 particle analyzer. After 30 seconds of ultrasonication, the particle measurement was performed using three pass throughs. The reported outcome of the measurement is the median diameter by volume of the particles, denoted by $D_{50}$.

*GPC Test Method*

The weight average molecular weight (Mw) can be measured by GPC method (Gel Permeation Chromatography), for example, using the following equipment and materials: instrument - Agilent Technologies 1200 series; column set - PLgel 10 micron Guard (50 × 7.5 mm i.d.) + PLgel Mixed-B 10 micron (300 × 7.5 mm i.d.); detector - Wyatt Optilab rEX RI detector; mobile phase - THF (1% Triethylamine); flow rate: 1.0ml/min; column oven temperature - 40 degrees C; sample concentration - 0.1%; and injection volume: 100 microliters. Polystyrene of known molecular weights were used for calibration purposes.

*Thermal Conductivity Test Method*

The thermal conductivity of the molded samples was measured according to ASTM D5470 ("Standard Test Method for Thermal Transmission Properties of Thermally Conductive Electrical Insulation Materials") using the Thermal Interface Material Tester Model TIM1400 (AnalysisTech Corp., Wakefield, MA). Discs with a diameter of 32 mm (1.26 inches) were cut out of the molded sheets using a die punch. The sample temperature on the TIM tester was set to 25°C (77°F), and test pressure was applied to target 5% compression of the sample (compression-ratio control mode). A thin layer of silicone oil (DC 200-1000 CS, obtained from AnalysisTech Corp., Wakefield, MA) was applied to the sample before placing it into the TIM tester to reduce the contact resistance between test surfaces and sample surfaces (increased surface wet-out). To subtract the contact resistance sample discs were stacked to different thicknesses and a plot of impedance (K-m^2/W) vs. thickness (m) was created. The inverse of a liner fitted slope to this plot is the measured material thermal conductivity (W/mK).

*Hardness Test Method*

A Shore D hardness tester was used to measure hardness of samples. The 75 mil samples were tested at five randomly selected points and the values were averaged. The instrument used was a Shore D hardness tester (Model 409D) from PTC Instruments Company, Los Angeles, CA, USA.

*Rheological Test Method*

The examples were analyzed by Dynamic Mechanical Analysis (DMA) using a DHR-3 parallel plate rheometer (TA Instruments, New Castle, DE, USA) to characterize the physical properties of each sample as a function of temperature. Rheology samples were extruded into an adhesive film approximately 1 mm thick between silicone coated release liners. After cooling back to room temperature, films were then punched out with an 8 mm circular die, removed from the release liner, centered between 8 mm diameter parallel plates of the rheometer, and compressed until the edges of the sample were uniform with the edges of the top and bottom plates.

The temperature was ramped in three steps while the parallel plates were oscillated at an angular frequency of 1 Hertz. During the first two steps, samples were run under an axial force control of 40 grams with a sensitivity of +/- 30 grams and conditioned at the start temperature of 40°C for 180 seconds prior to starting the test. The temperature was then ramped down from 40°C to -50°C at 3°C/min with a constant strain of 1 percent until the oscillatory stress exceeded 25,000 Pa, at which point the test was automatically changed to a constant stress of 25,000 Pa for the remainder of the temperature ramp step. A step termination condition was enabled to stop the low temperature ramp if the storage modulus (G') exceeded $4\times10^8$ Pa to prevent delamination of the adhesive sample from the fixtures.

For the third step, axial force was reduced to an axial force control of 25 grams with a sensitivity of +/- 30 grams and conditioned at the start temperature of 30°C for 60 seconds prior to starting this step. The temperature was then ramped from 30°C to 150°C at 3°C/min while the parallel plates were oscillated at an angular frequency of 1 Hertz and a constant strain of 2 percent. While many physical parameters of the material were recorded during the temperature ramp, shear storage modulus (G'), shear loss modulus (G"), and tan delta are of primary importance in the characterization of the copolymers of this invention.

*Melt Flow Index Test Method for All Samples*

Melt flow index (MFI) was conducted on all samples following the method set forth in ASTM D1238-13 (*Standard Test Method for Melt Flow Rates of Thermoplastics by Extrusion Platometer,* latest revision in 2013), Procedure A. The equipment used was a Tinius Olsen MP 987 Extrusion Plastometer (Melt Indexer), with the standard die dimensions for Procedure A. Conditions for the test were a temperature of 190 °C and a weight of 2.16 kg. A total of 8-19 replicates were performed to determine statistics, namely average MFI (in units of g/10 minutes), standard deviation of the MFI, and the 95% confidence interval about the mean.

*Melt Flow Index Literature Method*

MFI literature method was reported as ASTM D1238 with a 2.16 kg load and measured at 190°C and it is expected that those values are directly comparable to the tested MFI values reported in the Detailed Description section.

*Method for Calculating Melt Flow Index of Polymer Blend from each Polymer Melt Flow Index*

The MFI of a polymer blend can be approximated as:

$$\log(\mathrm{MFI_{Final}}) = X_1 * \log(\mathrm{MFI}_1) + X_2 * \log(\mathrm{MFI}_2)$$

where $X_1$ and $X_2$ are the weight fractions of each polymer $X_i$ and the $\mathrm{MFI}_1$ and $\mathrm{MFI}_2$ are the melt flow indices of the virgin polymers $\mathrm{MFI}_i$. Below is table for such calculations:

| Blend (wt/wt) | Polymer 1 | Polymer 2 | MFI Polymer 1 | MFI Polymer 2 | X1 | X2 | Blend MFI |
|---|---|---|---|---|---|---|---|
| 67/33 | LA2250 | LA4285 | 22.7 | 1.84 | 0.67 | 0.33 | 9.91 |

*Self-Adhesion Test and Results*

The Self-Adhesion Test was conducted on films of the sheath material to determine whether candidate sheath materials would meet the requirement of being "non-tacky". Coupons (25 millimeters × 75 millimeters × 0.8 millimeters) were cut out. For each material two coupons were stacked on each other and placed on a flat surface within an oven. A 750 gram weight (43 millimeters diameter, flat bottom) was placed on top of the two coupons, with the weight centered over the films. The oven was heated to 50 degrees Celsius, and the samples were left at that condition for 4 hours, and then cooled to room temperature. A static T-peel test was used to evaluate pass/fail. The end of one coupon was fixed to an immobile frame, and a 250 gram weight was attached to the corresponding end of the other coupon with a binder clip. If the films were flexible and began to peel apart, they formed a T-shape. If the two coupons could be separated with the static 250 gram load within 3 minutes of applying the weight to the second coupon, it was considered a pass and was non-tacky. Otherwise, if the two coupons remained adhered, it was considered a fail.

The following sheath materials were evaluated and passed the Self-Adhesion Test: BYNEL 21E522, BYNEL 30E753, ELVALOY 1224, ELVALOY 1330, ELVALOY 1609, ELVAX 3135 SB, 50:50 blend (by weight) of KURARITY LA2250 and KURARITY LA4285, 67:33 blend (by weight) of KURARITY LA2250 and KURARITY LA4285, NA217000 LDPE, NUCREL 925, NUCREL 3990, XN-287-CAY, PINNACLE 1350N, and PP 3860X. Further information about some of these materials is contained in the Detailed Description section above.

PREPARATORY EXAMPLES

*Preparatory Example 1: Copolymer formed from 95:5 IOA/AA (C1)*

The following components were added to a 1.8 liter stainless steel reactor: 950.0 grams IOA, 50.0 grams AA, 1.0 grams IRGANOX 1010, 0.71 grams IOTG, and 0.03 grams VAZO 52. The mixture was heated, while stirring, to 60°C. The reactor was purged of oxygen while heating and pressurized with 5 psi of nitrogen gas before reaching the induction temperature of 60°C. The polymerization reaction proceeded under adiabatic conditions to a peak reaction temperature of 145°C. The mixture was cooled to 60°C and 0.3545 grams of IOTG, 0.06 grams of VAZO 52, 0.04 grams of VAZO 88, 0.02 grams of LUPERSOL 101, and 0.06 grams of LUPERSOL 130 were added. The reactor was purged of oxygen and pressurized with 5 psi of nitrogen gas. The polymerization reaction proceeded under adiabatic conditions to a peak reaction temperature of 150°C. The reaction product was drained from the reactor. The weight average molecular weight of the product was 204 kDa.

*Preparatory Example 2: Copolymer formed from 85:15 2-EHA/AA (C2)*

This material was prepared as described in Synthesis Example S1 of US 2013/0184394 (Satrijo et al.) except that the composition was as follows: 85 parts 2-EHA, 15 parts AA, 0.20 phr of IRGACURE 651, 0.4 phr IRGANOX 1076, and 0.75 phr IOTG. The weight average molecular weight of the product was 59.1 kDa.

*Preparatory Example 3: Tri-modal blend of 3:1:1 BAK70/BAK10/TM1250 (C3)*

Premixed tri-modal alumina fillers were prepared by adding 300 grams BAK70, 100 grams BAK10, and 100 grams TM1250 to a plastic container and placing in a dual asymmetric centrifuge mixer (DAC600.2 VAC-LR SPEEDMIXER, FlackTek, Inc., Landrum, SC) and mixed at 800 rpm for 60 seconds.

*Preparatory Example 4: Preparation of Sheath from LDPE (C4)*

Films of non-tacky sheaths were prepared by hot melt pressing pellets of LDPE to average thickness of 5-7 mils (0.127-0.178 mm) in a Model 4389 hot press (Carver, Inc., Wabash, IN) at 140°C (284°F). Rectangles of film 1.5 inch (3.77 cm) in width and 2.7-5.9 inch (7-15 cm) in length were cut and used in the examples as described below.

*Preparatory Example 5: Preparation of Sheath from LDPE (C5)*

Film of non-tacky sheaths using LDPE was produced on a seven-layer pancake stack die (obtained under the trade designation "LF-400 COEX 7-LAYER" from Labtech Engineering Co., Ltd., Praksa Muang, Samutprakam, Thailand). Airflow to the die was manually controlled to achieve a blow-up ratio of about 2:1. The bubble was subsequently collapsed about 3 meters (10 feet) above the die and rolled up. The feed materials were supplied by 7 independent 20 mm diameter extruders, each with an about 30:1 L/D. The screws feeding each layer had a compression ratio of 3:1 with a Maddock mixing section followed by a Pineapple mixing section. Film thickness was 5 mil (0.127 mm).

Processing temperature profiles were as follows: Layers 1-7 Extruder Temperature: Zone 1: 325°F (163°C), Zone 2: 336°F (182°C), Zone 3: 360°F (182°C). Adaptor and Die Temperatures were as follows: Adaptor 360°F (182°C), Die 360°F (182°C).

*Preparatory Example 6: Films with multiple layers of KSO21P and a layer ofPEBAX (C6)*

Film containing multiple layers of KS021P and a layer of PEBAX were produced on the same LF-400 COEX 7-LAYER film blowing line as described in Preparatory Example 5, except for the following conditions for die temperatures and extruder parameters.

Layers 1-7 Extruder Temperature: Zone 1: 350°F (177°C), Zone 2: 375°F (191°C), and Zone 3: 400°F (204°C). Adaptor and Die Temperatures were as follows: Adaptor 420°F (216°C), Die 420°F (216°C). Extruders 1-6, all containing KS021P, were run at 30 revolutions per minute, while extruder 7, containing PEBAX, was run at 14.2 revolutions per minute.

The overall thickness of the film obtained was 0.056 mm (2.20 mil). The PEBAX film layer could easily be separated from the rest of the film made of KS021P. The thickness of PEBAX film separated was 0.005 mm (0.197 mil). The co-extruded film was then slit into a 150 mm and 25 mm wide roll to be laminated.

*Preparatory Example 7: Formation of Sheet containing (meth)acrvlate copolymer with acidic groups and a tri-modal distribution of 1:2:1.5 BF013/BF083/ATH (C7)*

0.383 grams of BYK145, 0.097 grams of IOTG, 0.050 grams of IRGACURE 819, 0.027 grams of IRGACURE 651, 1.341 grams of AA, and 17.816 grams of partially polymerized 2-ethylhexylacrylate were weighed, put in a 225 mL glass jar, and then mixed by a Planetary Centrifugal Mixer at 2000 rpm rotation for 1 minute. 17.8 grams BF013 and 35.6 grams BF083 were then weighed, added to the 225 mL jar, and mixed by the Planetary Centrifugal Mixer at 2000 rpm rotation for 2 minutes. Finally, 26.7 grams ATH were weighed, added to the 225 mL glass jar, then the ingredients were again mixed by the Planetary Centrifugal Mixer at 2000 rpm rotation for 2 minutes. The 225 mL glass jar was then placed in a vacuum deaerator and purged with nitrogen for 15 minutes. The operation was repeated 6 times to make about 600 grams of pre-adhesive syrup.

The pre-adhesive syrup which was prepared was then poured between two liners (Purex A50 and Cerapeel MIB(E)) on a coating line where the coater head was set so that the gap between the two liners was 1.0 mm. The composition was then exposed to a UV light source of black light fluorescent lamps having a peak emission wavelength of 350 nanometers to provide an approximate total energy of 7790 mJ/cm2 until copolymerization was complete. The acrylate monomer mixture between the two liners turned into polymer when it came out from the UV chamber.

The molecular weight (Mw) of the acrylate polymer was measured utilizing the GPC Test Method below. The Mw of the acrylate polymer was 86,000 Daltons.

*Preparatory Example 8: Formation of Sheet containing (meth)acrylate copolymer with basic groups and a tri-modal distribution of 1:2:1.5 BF013/BF083/ATH (C8)*

A glass jar was filled with 30.0 grams of 2-EHA/DMAEMA (40/60) copolymer and 30.0 grams of 2-EHA. The jar was put on a roller overnight and the polymer was completely dissolved in 2-EHA. From this glass jar, 7.805 grams of this solution was weighed out and put into a new 225 mL glass jar. To this new 225 mL glass jar of solution was added 0.390 grams of BYK145, 0.020 grams of MTPE1, 0.051 grams of IRGACURE 819, 0.027 grams of IRGACURE 651, 5.854 grams IBOA, and 5.854 grams of partially polymerized 2-ethylhexylacrylate. This new glass 225 mL jar was then mixed by the Planetary Centrifugal Mixer at 2000 rpm rotation for 1 minute. 17.78 grams BF013 and 35.55 grams BF083 were then added to this new glass 225 mL jar and mixed by the Planetary Centrifugal Mixer at 2000 rpm rotation for 2 minutes. Finally, 26.67 grams ATH were added to this new glass 225 mL jar, then the ingredients were again mixed by the Planetary Centrifugal Mixer at 2000 rpm rotation for 2 minutes. This new glass 225 mL jar was then placed in a vacuum deaerator and purged with nitrogen for 15 minutes. The operation was repeated 6 times to make about 600 grams of pre-adhesive syrup.

The pre-adhesive syrup was then coated between the two liner materials described in C7. It was then polymerized under the UV light source of black light fluorescent lamps under the same conditions described above, except the gap between the two liners was set to be 0.5 mm.

The molecular weight of the binder polymerized above was measured utilizing the GPC Test Method below. The Mw of the acrylate polymer was 180,000 Daltons.

*Preparatory Example 9: Acidic layer (C7) laminated to basic layer (C8) to produce bi-layer acid/base construction (C9)*

An extrudable acrylate strand was prepared by combining C7 and C8 according to the following two stage process.

In stage 1, the 120 mm wide thermally conductive sheets (C7 and C8) on the 150 mm wide PET liner were sent through a web converting line, where the acidic layer (C7) and basic layer (C8) were laminated to each other, yielding a ratio of acidic layer to basic sheet of 1:2. Lamination of the two sheets was followed by the removal of the PET liner from the acidic layer (C7) and then the introduction of the co-extruded blown film construction (C6) being bonded to the lamination with PEBAX side contacting the acidic layer (C7). Then, the PP outer film (KS021P layer) of the co-extruded blow film construction (C6) was removed, leaving behind the thin PEBAX layer on the outside of the acidic layer (C7). This material was then slit down to 15 mm wide strip rolls.

In stage 2, the 15 mm wide strip rolls with 25 mm wide co-extruded film construction were sent through another web converting line. This time, the base layer (C8) was fed on top and the acid layer (C7) was set toward the bottom. The PET liner from the base layer (C8) was removed. The 25 mm wide co-extruded blown film construction (C6) was then bonded to the lamination with PEBAX side contacting the basic layer (C8). Then, the PP outer film (KS021P layer) of the co-extruded blow film construction (C6) was removed, leaving behind the thin PEBAX layer on the outside of the basic layer (C7). The final acid-base laminated construction then had its outer PEBAX layers with wider edges pinched, wrapping the construction. This final strip roll was then wound on a 3" core.

*Preparatory Example 10: Preparation of Sheath from blend of KURARITY LA 2250 and KURARITY LA4285 (C10)*

The batch preparation of this sheath film was carried out using a Brabender Plasti-corder unit equipped with an electrically heated three-part mixer with a capacity of approximately 55 cm$^3$ and high shear counter-rotating blades. The mixer was preheated to 150°C and set at a mixing speed of 60 rpm and each of the acrylic block copolymer resins (KURARITY LA2250 and KURARIT LA4285) was added directly to the top of the mixing barrel totaling 50 grams. The weight ratio was 67:33 LA2250 to LA4285. The mixing operation was run for 5 minutes, at which time the mixture appeared homogeneous. After removal from the mixer, the bulk material was hot melt pressed on a Carver press at 140°C to yield a 7.6 mil thick film.

EXAMPLES

*Example 1 (EX-1)*

The batch preparation of a core composition was carried out using a Plasti-corder EPL-V3302 (C.W. Brabender, Hackensack, NJ)) equipped with an electrically heated three-part mixer with a capacity of approximately 250 cm$^3$ and high shear counter-rotating blades. The mixer was preheated to 140°C (284°F) and set at a mixing speed of 60 rpm. 124.99 g C2 (from Preparatory Example 2, which is a (meth)acrylate-based polymeric material formed from 85:15 2-HEA/AA) was added to the chamber and allowed to mix for two minutes before 81.28 g BAK90, 31.24 g BAK15 and 12.54 g BAK2 were added. Then the mixture was mixed for an additional 10 minutes.

A core/sheath filament was made by hand rolling the core composition with C4 (the LDPE sheath of Preparatory Example 4) to yield a core/sheath filament that was 0.47 inch (12mm) in diameter and having a length equal 16.54 inch (42 cm).

Then16.54 inch (42 cm) of core/sheath filament was added directly to the top of the mixing chamber totaling about 50 g and mixed at 60 rpm, 150°C (302°F) for 10 minutes, at which time the mixture appeared homogeneous. After removal from the mixer, a hot press (Model 4389 hot press Carver, Inc., Wabash, IN) was used to press a portion of the sample to 50 mil (1.27 mm) and 75 mil (1.91 mm) thicknesses between silicone coated release liners using 25 mil (0.635 mm) shim stock.

*Example 2 (EX-2)*

This core-sheath filament was prepared the same as Example 1, except 87.53 g C2 (which is a (meth)acylate-based polymeric material from Preparatory Example 2), 105.65 g BAK90, 40.62 g BAK15, and 16.25 g BAK2 were used.

*Example 3 (EX-3)*

This core-sheath filament was prepared the same as Example 1, except 50.03 g C2 (which is a (meth)acrylate-based polymeric material from Preparatory Example 2), 130.01 g BAK90, 49.97 g BAK15, and 20.02 g BAK2 were used.

*Example 4 (EX-4)*

This core-sheath filament was prepared the same as Example 1, except 100.02 g C2 (a (meth)acrylate-based polymeric material from Preparatory Example 2), 150.02 g Boron Nitride were used in place of the tri-modal mixture of BAK90/BAK15/BAK2, and the sheath was C5 (from Preparatory Example 5, which is a LDPE) rather than C4 from Preparatory Example 4.

*Example 5 (EX-5)*

This core-sheath filament was prepared the same as Example 1, except 50.01 g C2 (a (meth)acrylate-based polymeric material from Preparatory Example 2), 200.04 g ATH were used in place of the tri-modal mixture of BAK90/BAK15/BAK2, C5 (from Preparatory Example 5, which is a LDPE) rather than C4 from Preparatory Example 4, and the mixer temperature was 150°C (302°F) for the compounding portion.

*Example 6 (EX-6)*

This core-sheath filament was prepared the same as Example 5, except 50.02 g C2 (a (meth)acrylate-based polymeric material from Preparatory Example 2) was used and 200.07 g C3 (which is the tri-modal particle blend of Preparatory Example 3 with 3:1:1 BAK70/BAK10/TM1250) was used in place of the ATH.

*Example 7 (EX-7)*

This core-sheath filament was prepared the same as Example 5, except 50.08 g C1 (which is from Preparatory Example 1 and is a copolymer formed from 95:5 IOA/AA) was used as the (meth)acrylate-based polymeric material and 200.14 g C3 (which is from Preparatory Example 3 and is a tri-modal mixture of 3:1:1 BAK70/BAK10/TM1250) was used in place of ATH.

*Example 8 (EX-8)*

The batch preparation of thermal management materials was carried out using a Plasti-corder EPL-V3302 (C.W. Brabender, Hackensack, NJ)) equipped with an electrically heated three-part mixer with a capacity of approximately 250 cm$^3$ and high shear counter-rotating blades. The mixer was preheated to 140°C (284°F) and set at a mixing speed of 60 rpm. 16.54 inch (42 cm) of C9 (which is from Preparatory Example 9 and is a bi-layer construction of an acidic polymer and a basic polymer) was added directly to the top of the mixing chamber, totaling about 50 g and mixed at 60 rpm, 150°C (302°F) for 10 minutes, at which time, the mixture appeared homogeneous. After removal from the mixer, a hot press (Model 4389 hot press Carver, Inc., Wabash, IN) was used to press a portion of the material to 50 mil (1.27 mm) and 75 mil (1.91 mm) thicknesses between silicone coated release liners using 25 mil (0.635 mm) shim stock.

*Example 9 (EX-9)*

This was prepared the same as Example 5, except 50 g PE2, and 200 g BAK15 were used.

*Example 10 (FX-10)*

This core-sheath filament was prepared the same as Example 5, except 23.4 g C1 (which is from Preparatory Example 1 and is a copolymer formed from 95:5 IOA/AA) was used as the (meth)acrylate-based polymeric material and 132.6 g C3 (which is from Preparatory Example 3 and is a tri-modal mixture of 3:1:1 BAK70/BAK10/TM1250) was used in place of ATH. Additionally, an Intelli-Torque Brabender Plasti-corder (C.W. Brabender, Hackensack, NJ) unit equipped with an electrically heated three-part mixer with a capacity of approximately 55cm$^3$ and high shear counter-rotating blades with a mixing speed of 60 rpm preheated to 150°C was used in place of the Plasti-corder EPL-V3302 model.

*Example 11 (EX-11)*

This core-sheath filament was prepared the same as Example 10, except 15.6 g C1 (which is from Preparatory Example 1 and is a copolymer formed from 95:5 IOA/AA) was used as the (meth)acrylate-based polymeric material and 140.4 g C3 (which is from Preparatory Example 3 and is a tri-modal mixture of 3:1:1 BAK70/BAK10/TM1250) was used in place of ATH.

*Example 12 (EX-12)*

This core-sheath filament was prepared the same as Example 10, except 15.0 g C1 (which is from Preparatory Example 1 and is a copolymer formed from 95:5 IOA/AA) was used as the (meth)acrylate-based polymeric material and 185.0 g C3 (which is from Preparatory Example 3 and is a tri-modal mixture of 3:1:1 BAK70/BAK10/TM1250) was used in place of ATH.

*Example 13 (EX-13)*

This core-sheath filament was prepared the same as Example 10, except 28.6 g C1 (which is from Preparatory Example 1 and is a copolymer formed from 95:5 IOA/AA) was used as the (meth)acrylate-based polymeric material, 114.5 g BAK70 was used in place of C3, and the sheath was a blend of KURARITY LA2250 and KURARITY LA4285 (C10 from Preparatory Example 10).

*Example 14 (EX-14)*

This core-sheath filament was prepared the same as Example 10, except 23.5 g C1 (which is from Preparatory Example 1 and is a copolymer formed from 95:5 IOA/AA) was used as the (meth)acrylate-based polymeric material, 133.0 g BAK70 was used in place of C3, and the sheath was a blend of KURARITY LA2250 and KURARITY LA4285 (C10 from Preparatory Example 10).

*Example 15 (EX-15)*

This core-sheath filament was prepared the same as Example 10, except 17.3 g C1 (which is from Preparatory Example 1 and is a copolymer formed from 95:5 IOA/AA) was used as the (meth)acrylate-based polymeric material, 155.3 g BAK70 was used in place of C3, and the sheath was a blend of KURARITY LA2250 and KURARITY LA4285 (C10 from Preparatory Example 10).

Table 2: Summary of Composition of Core-Sheath Filaments (Examples 1-12)

| Sample | (Meth)acrylate-based polymer | Thermally conductive particles | Percent loading of thermally conductive particles in core | Sheath |
|---|---|---|---|---|
| EX-1 | 85:15 2-HEA/AA | 6.5:2.5:1 BAK90/BAK15/BAK2 | 50 wt-% | LDPE |
| EX-2 | 85:15 2-HEA/AA | 6.5:2.5:1 BAK90/BAK15/BAK2 | 65 wt-% | LDPE |
| EX-3 | 85:15 2-HEA/AA | 6.5:2.5:1 BAK90/BAK15/BAK2 | 80 wt-% | LDPE |
| EX-4 | 85:15 2-HEA/AA | Boron Nitride | 60 wt-% | LDPE |
| EX-5 | 85:15 2-HEA/AA | ATH | 80 wt-% | LDPE |
| EX-6 | 85:15 2-HEA/AA | 3:1:1 BAK70/BAK10/TM1250 | 80 wt-% | LDPE |
| EX-7 | 95:5 IOA/AA | 3:1:1 BAK70/BAK10/TM1250 | 80 wt-% | LDPE |

(continued)

| Sample | (Meth)acrylate-based polymer | Thermally conductive particles | Percent loading of thermally conductive particles in core | Sheath |
|---|---|---|---|---|
| EX-8 | Acidic and basic polymeric blend | 1:2:1.5 BF013/BF083/ATH | 82 wt-% | PEBAX |
| EX-9 | 85:15 2-HEA/AA | BAK15 | 80 wt-% | LDPE |
| EX-10 | 95:5 IOA/AA | 3:1:1 BAK70/BAK10/TM1250 | 85 wt-% | LPDE |
| EX-11 | 95:5 IOA/AA | 3:1:1 BAK70/BAK10/TM1250 | 90 wt-% | LPDE |
| EX-12 | 95:5 IOA/AA | 3:1:1 BAK70/BAK10/TM1250 | 92.5 wt-% | LPDE |
| EX-13 | 95:5 IOA/AA | BAK 70 | 80 wt-% | 67/33 LA2250/LA4285 |
| EX-14 | 95:5 IOA/AA | BAK 70 | 85 wt-% | 67/33 LA2250/LA4285 |
| EX-15 | 95:5 IOA/AA | BAK 70 | 90 wt-% | 67/33 LA2250/LA4285 |

RESULTS

Measurements for thermal conductivity using the Thermal Conductivity Test Method and for Shore D hardness using Hardness Test Method were collected for Examples 1-12 (EX-1 - EX-12) and presented in Table 3 below. NT means not tested.

Table 3: Thermal conductivity and Shore D hardness results

| Sample ID | Percent Loading of Thermally Conductive Particles in Core | Thermal Conductivity (W/mK) | Shore D Hardness |
|---|---|---|---|
| EX-1 | 50 wt-% | 0.417 W/mK +/- 10.6% | 44.3 ± 2.7 |
| EX-2 | 65 wt-% | 0.667 W/mK +/- 9.8% | 38.7 ± 2.5 |
| EX-3 | 80 wt-% | 1.41 W/mK +/-20.2% | 38.3 ± 1.7 |
| EX-4 | 60 wt-% | 0.94 W/mK ± 12.7% | 34.3 ± 1.7 |
| EX-5 | 80 wt-% | 1.54 W/mK ± 10.5% | 39.7 ± 1.2 |
| EX-6 | 80 wt-% | 1.15 W/mK ± 17.2% | 34.0 ± 0.8 |
| EX-7 | 80 wt-% | 1.01 W/mK ± 10.8% | 32.7 ± 1.7 |
| EX-8 | 82 wt-% | 1.60 W/mK ± 9.8% | 22.0 ± 2.0 |
| EX-9 | 80 wt-% | 0.981 W/mK +/- 8.3% | 39.2 ± 1.8 |
| EX-10 | 85 wt-% | 1.76 W/mK +/- 8.8% | 32.0 ± 2.9 |
| EX-11 | 90 wt-% | 3.11 W/mK +/- 7.6% | 35.0 ± 2.8 |
| EX-12 | 92.5 wt-% | 3.60 W/mK +/- 7.1% | 43.0 ± 1.4 |
| EX-13 | 80 wt-% | 1.0 W/mK +/- 8.7% | NT |
| EX-14 | 85 wt-% | 1.4 W/mK +/- 9.0% | NT |
| EX-15 | 90 wt-% | 2.0 W/mK +/- 7.4% | NT |

Rheological measurements taken using Rheological Test Method for Example 3 (EX-3) and Example 9 (EX-9) are presented in Tables 4 and 5.

Table 4: Rheology Results at 125°C

| Sample ID | Loss Modulus G" @ T=125°C (kPa) | Storage Modulus G' @ T=125°C (kPa) | Complex Modulus G* @ T=125°C (kPa) | Tan delta @ T=125°C |
|---|---|---|---|---|
| Example 3 | 6.5 | 1.6 | 6.7 | 4.1 |
| Example 9 | 16.1 | 6.8 | 17.5 | 2.4 |

Table 5: Rheology Results at 150°C

| Sample ID | Loss Modulus G" @ T=150°C (kPa) | Storage Modulus G' @ T=150°C (kPa) | Complex Modulus G* @ T=150°C (kPa) | Tan delta @ T=150°C |
|---|---|---|---|---|
| Example 3 | 2.1 | 0.5 | 2.2 | 4.2 |
| Example 9 | 7.1 | 2.6 | 7.6 | 2.8 |

**Claims**

1.  A core-sheath filament comprising:

    a) 90 to 99.9 weight percent of a core that is a thermally conductive pressure-sensitive adhesive, the core comprising

    1) 2 to 50 weight percent of a (meth)acrylate-based polymeric material based on a total weight of the core; and
    2) 50 to 98 weight percent of thermally conductive particles based on a total weight of the core; and

    b) 0.1 to 10 weight percent of a sheath surrounding the core, wherein the sheath comprises a thermoplastic material that is non-tacky;

    wherein the core-sheath filament has a diameter in a range of 1 to 20 millimeters.

2.  The core-sheath filament of claim 1, wherein the sheath exhibits a melt-flow index of less than 15 grams per 10 minutes.

3.  The core-sheath filament of claim 1, wherein the (meth)acrylate-based polymeric material has a glass transition temperature that is no greater than 20°C.

4.  The core-sheath filament of claim 1, wherein the core comprises 2 to 20 weight percent of the (meth)acrylate-based polymeric material and 80 to 98 weight percent of the thermally conductive particles based on a total weight of the core.

5.  The core-sheath filament of any one of claims 1 to 4, wherein the thermally conductive particles have a multi-modal size distribution.

6.  The core-sheath filament of claim 5, wherein the thermally conductive particles have a tri-modal size distribution and the core comprises 2 to 15 weight percent of the (meth)acrylate-based polymeric material and 85 to 98 weight percent thermally conductive particles based on the total weight of the core.

7.  The core-sheath filament of any one of clams 1 to 6, wherein the core comprises a first (meth)acrylate-based polymeric material having acidic groups and a second (meth)acrylate-based polymeric material having basic groups.

8. A method of making a core-sheath filament, the method comprising:

a) forming (or providing) a core composition that is a thermally conductive pressure-sensitive adhesive, the core comprising

1) 2 to 50 weight percent of a (meth)acrylate-based polymeric material based on a total weight of the core; and
2) 50 to 98 weight percent of thermally conductive particles based on a total weight of the core; and

b) providing a sheath composition comprising a non-tacky thermoplastic material; and
c) wrapping the sheath composition around the core composition to form the core-sheath filament, wherein

the core-sheath filament comprises 90 to 99.9 weight percent core and 0.1 to 10 weight percent sheath based on a total weight of the core-sheath filament; and
the core-sheath filament has a diameter in a range of 1 to 20 millimeters.

9. The method of claim 8, wherein the wrapping the sheath composition around the core composition comprises co-extruding the core composition and the sheath composition such that the sheath composition surrounds the core composition.

10. A method of printing a pressure-sensitive adhesive that is thermally conductive, the method comprising:

a) providing a core-sheath filament according to claim 8 or 9;
b) melting the core-sheath filament and blending the sheath with the core to form a molten composition; and
c) dispensing the molten composition through a nozzle onto a substrate.


**Patentansprüche**

1. Ein Kern-Hülle-Filament, umfassend:

a) zu 90 bis 99,9 Gew.-% einen Kern, der ein wärmeleitfähiger Haftklebstoff ist, wobei der Kern umfasst:

1) zu 2 bis 50 Gew.-% ein Polymermaterial auf (Meth)acrylat-Basis, basierend auf einem Gesamtgewicht des Kerns; und
2) zu 50 bis 98 Gew.-% wärmeleitfähige Partikel, basierend auf einem Gesamtgewicht des Kerns; und

b) zu 0,1 bis 10 Gewichtsprozent eine den Kern umgebende Hülle, wobei die Hülle ein thermoplastisches Material umfasst, das nicht klebrig ist;

wobei das Kern-Hülle-Filament einen Durchmesser in einem Bereich von 1 bis 20 Millimetern aufweist.

2. Das Kern-Hülle-Filament nach Anspruch 1, wobei die Hülle einen Schmelzflussindex von weniger als 15 Gramm pro 10 Minuten aufweist.

3. Das Kern-Hülle-Filament nach Anspruch 1, wobei das Polymermaterial auf (Meth)acrylat-Basis eine Glasübergangstemperatur aufweist, die nicht größer als 20 °C ist.

4. Das Kern-Hülle-Filament nach Anspruch 1, wobei der Kern zu 2 bis 20 Gewichtsprozent das Polymermaterial auf (Meth)acrylat-Basis und zu 80 bis 98 Gewichtsprozent die wärmeleitfähigen Partikel umfasst, basierend auf einem Gesamtgewicht des Kerns.

5. Das Kern-Hülle-Filament nach einem der Ansprüche 1 bis 4, wobei die wärmeleitfähigen Partikel eine multimodale Größenverteilung aufweisen.

6. Das Kern-Hülle-Filament nach Anspruch 5, wobei die wärmeleitfähigen Partikel eine trimodale Größenverteilung aufweisen und der Kern zu 2 bis 15 Gew.-% das Polymermaterial auf (Meth)acrylat-Basis und zu 85 bis 98 Gew.-% wärmeleitfähige Partikel umfasst, basierend auf dem Gesamtgewicht des Kerns.

**7.** Das Kern-Hülle-Filament nach einem der Ansprüche 1 bis 6, wobei der Kern ein erstes Polymermaterial auf (Meth)acrylat-Basis, das saure Gruppen aufweist, und ein zweites Polymermaterial auf (Meth)acrylat-Basis, das basische Gruppen aufweist, umfasst.

**8.** Ein Verfahren zum Herstellen eines Kern-Hülle-Filaments, wobei das Verfahren umfasst:

a) Bilden (oder Bereitstellen) einer Kernzusammensetzung, die ein wärmeleitfähiger Haftklebstoff ist, wobei der Kern umfasst

1) zu 2 bis 50 Gew.-% ein Polymermaterial auf (Meth)acrylat-Basis, basierend auf einem Gesamtgewicht des Kerns; und
2) zu 50 bis 98 Gew.-% wärmeleitfähige Partikel, basierend auf einem Gesamtgewicht des Kerns; und

b) Bereitstellen einer Hüllenzusammensetzung, die ein nicht klebriges thermoplastisches Material umfasst; und
c) Wickeln der Hüllenzusammensetzung um die Kernzusammensetzung, um das Kern-Hülle-Filament zu bilden, wobei

das Kern-Hülle-Filament zu 90 bis 99,9 Gew.-% Kern und zu 0,1 bis 10 Gew.-% Hülle umfasst, basierend auf einem Gesamtgewicht des Kern-Hülle-Filaments; und
das Kern-Hülle-Filament einen Durchmesser in einem Bereich von 1 bis 20 Millimetern aufweist.

**9.** Das Verfahren nach Anspruch 8, wobei das Wickeln der Hüllenzusammensetzung um die Kernzusammensetzung das Koextrudieren der Kernzusammensetzung und der Hüllenzusammensetzung umfasst, sodass die Hüllenzusammensetzung die Kernzusammensetzung umgibt.

**10.** Ein Verfahren zum Drucken eines Haftklebstoffs, der wärmeleitfähig ist, wobei das Verfahren umfasst:

a) Bereitstellen eines Kern-Hülle-Filaments nach Anspruch 8 oder 9;
b) Schmelzen des Kern-Hülle-Filaments und Mischen der Hülle mit dem Kern, um eine geschmolzene Zusammensetzung zu bilden; und
c) Abgeben der geschmolzenen Zusammensetzung durch eine Düse auf ein Substrat.

## Revendications

**1.** Filament à âme-gaine comprenant :

a) 90 à 99,9 pour cent en poids d'une âme qui est un adhésif sensible à la pression thermoconducteur, l'âme comprenant

1) 2 à 50 pour cent en poids d'un matériau polymère à base de (méth)acrylate sur la base d'un poids total de l'âme ; et
2) 50 à 98 pour cent en poids de particules thermoconductrices sur la base d'un poids total de l'âme ; et

b) 0,1 à 10 pour cent en poids d'une gaine entourant l'âme, dans lequel la gaine comprend un matériau thermoplastique qui est non collant ;

dans lequel le filament à âme-gaine a un diamètre dans une plage de 1 à 20 millimètres.

**2.** Filament à âme-gaine selon la revendication 1, dans lequel la gaine présente un indice de fluidité à l'état fondu inférieur à 15 grammes en 10 minutes.

**3.** Filament à âme-gaine selon la revendication 1, dans lequel le matériau polymère à base de (méth)acrylate a une température de transition vitreuse qui n'est pas supérieure à 20 °C.

**4.** Filament à âme-gaine selon la revendication 1, dans lequel l'âme comprend 2 à 20 pour cent en poids du matériau polymère à base de (méth)acrylate et 80 à 98 pour cent en poids des particules thermoconductrices sur la base d'un poids total de l'âme.

**5.** Filament à âme-gaine selon l'une quelconque des revendications 1 à 4, dans lequel les particules thermoconductrices ont une distribution granulométrique multimodale.

**6.** Filament à âme-gaine selon la revendication 5, dans lequel les particules thermoconductrices ont une distribution granulométrique trimodale et l'âme comprend 2 à 15 pour cent en poids du matériau polymère à base de (méth)acrylate et 85 à 98 pour cent en poids des particules thermoconductrices sur la base du poids total de l'âme.

**7.** Filament à âme-gaine de l'une quelconque des revendications 1 à 6, dans lequel l'âme comprend un premier matériau polymère à base de (méth)acrylate ayant des groupes acides et un deuxième matériau polymère à base de (méth)acrylate ayant des groupes basiques.

**8.** Procédé de fabrication d'un filament à âme-gaine, le procédé comprenant :

a) la formation (ou fourniture) d'une composition d'âme qui est un adhésif sensible à la pression thermoconducteur, l'âme comprenant

1) 2 à 50 pour cent en poids d'un matériau polymère à base de (méth)acrylate sur la base d'un poids total de l'âme ; et
2) 50 à 98 pour cent en poids de particules thermoconductrices sur la base d'un poids total de l'âme ; et

b) la fourniture d'une composition de gaine comprenant un matériau thermoplastique non collant ; et
c) l'enveloppement de la composition de gaine autour de la composition d'âme pour former le filament à âme-gaine, dans lequel

le filament à âme-gaine comprend 90 à 99,9 pour cent en poids d'âme et 0,1 à 10 pour cent en poids de gaine sur la base d'un poids total du filament à âme-gaine ; et
le filament à âme-gaine a un diamètre dans une plage de 1 à 20 millimètres.

**9.** Procédé selon la revendication 8, dans lequel l'enveloppement de la composition de gaine autour de la composition d'âme comprend la coextrusion de la composition d'âme et de la composition de gaine de telle sorte que la composition de gaine entoure la composition d'âme.

**10.** Procédé d'impression d'un adhésif sensible à la pression qui est thermoconducteur, le procédé comprenant :

a) la fourniture d'un filament à âme-gaine selon la revendication 8 ou 9 ;
b) la fusion du filament à âme-gaine et le mélange de la gaine avec l'âme pour former une composition fondue ; et
c) la distribution de la composition fondue à travers une buse sur un substrat.

*Fig. 1*

*Fig. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017212190 A1
- US 7773834 B, Ouderkirk
- US 5637646 A, Ellis
- US 5986011 A, Ellis
- US 4619979 A
- US 4843134 A, Kotnour
- US 5804610 A, Hamer
- US 20130004694 A, Hitschmann
- US 20130184394 A, Satrijo

**Non-patent literature cited in the description**

- **MATTIONI et al.** *J. Chem. Inf. Comput. Sci.,* 2002, vol. 42, 232-240
- **TURNER, B.N. et al.** A review of melt extrusion additive manufacturing processes: I. process design and modeling. *Rapid Prototyping Journal,* 2014, vol. 20 (3), 192-204